# EUROPEAN PATENT APPLICATION

(11) **EP 2 544 282 A1**
(43) Date of publication of application: **09.01.2013**
(21) Application number: 11750577.6
(22) Date of filing: 25.02.2011
(51) Int. Cl.: H01M 4/66, C23F 11/00, C25D 7/06, H01M 4/134, H01M 4/1395, H01M 4/74

(54) **SURFACE TREATMENT METHOD FOR COPPER FOIL, SURFACE TREATED COPPER FOIL AND COPPER FOIL FOR NEGATIVE ELECTRODE COLLECTOR OF LITHIUM ION SECONDARY BATTERY**

(30) Priority: 31.03.2010 JP 2010080869; 17.03.2010 JP 2010060307; 01.03.2010 JP 2010044038
(71) Applicant: Furukawa Electric Co., Ltd., Chiyoda-ku Tokyo 100-8322 (JP)
(72) Inventor: OGURO, Ryoichi, Tokyo 100-8322 (JP)
(74) Representative: Thun, Clemens
(86) International application number: PCT/JP2011/054371
(87) International publication number: WO 2011/108467

(57) **Abstract**

Disclosed is a copper foil for a negative electrode collector capable of simultaneously achieving high capacity and long life charge/discharge cycles in a secondary battery, wherein the front and back surfaces are of a uniform shape and, for example, the properties of a silicon active material of a lithium ion secondary battery are sufficiently realized; and a negative electrode using the copper foil. In one embodiment, a first roughened layer of metallic copper is formed by pulse cathode electrolysis roughening treatment on the surface of an untreated rolled copper foil base material of oxygen-free copper in a first roughening treatment tank (1) filled with a copper-sulphuric acid electrolyte (12), and a second copper-plate layer is formed on the surface of the first roughened layer by smooth copper plating treatment in a second copper plating treatment tank (2) filled with a copper-sulphuric acid electrolyte (22).

## Description

### Technical Field

The present invention relates to a surface treatment method for a copper foil, a surface-treated copper foil, and a copper foil for a negative electrode collector of a lithium ion secondary battery which uses the surface-treated copper foil.

### Background Art

In a lithium ion secondary battery, in the same way as a positive electrode, the properties of a negative electrode affect the quality of the charging and discharging characteristic and of maintenance of high potential as a secondary battery.
When considering the negative electrode, particularly the negative electrode collector into account, for increasing the capacity of a lithium ion secondary battery, improvement of the collection capacity of the negative electrode collector is necessary.

A negative electrode collector for a lithium ion secondary battery has been produced by, for example, coating carbon (graphite) which has been mixed with a binder as an active material on the two surfaces of a copper foil and pressing and drying it. However, when using carbon, the result was not satisfactory for applications which require a high capacity and a large number of charge and discharge cycles, for example, for applications for hybrid vehicles or electric vehicles.

For example, it is possible to improve the collection capacity of the negative electrode collector by increasing the thickness of the active material which is made of carbon mixed with a binder. However, it is technically difficult to coat carbon on the two surfaces of a copper foil which is used as a collector, with a uniform thickness. Further, it suffers from the disadvantage of the enlargement of the dimensions of the battery by coating the carbon active material thick.

Advances have been made in the art of for remarkably improving the amount of adsorption of lithium by changing the active material from carbon to a silicon-based material.
A silicon-based active material has a unique hardness and large expansion and contraction between nodules during charging and discharging. The silicon-based active material is very large in charging and discharging capacity compared with the carbon-based active material.
The nodule size of the silicon-based active material can be made small, therefore, the drop in capacity due to the charge and discharge cycles can be kept small.
For these reasons, the silicon-based active material is considered promising as the material closest to commercialization in application to a negative electrode collector of a secondary battery.

By using such a metal foil as the collector and laminating a silicon-based active material on the collector to form a negative electrode, it is expected that, for example, higher capacity and a large number of charge and discharge cycles can be simultaneously achieved in a lithium ion secondary battery.

When the silicon-based active material is used, due to the fineness of its grain size, there is required a suitable "roughness" on the surface of the collector which to be bonded with.
If the surface roughness of the collector of a secondary battery is proper, "a lot of silicon-based active material can be packed in" and an improvement of capacity of the secondary battery can be contributed to.
Further, in order to use the silicon-based active material for the collector of a secondary battery, the metal foil which is used for the collector having a suitable hardness and metallic plasticity (elongation), is an essential requirement.

### Citations List

### Patent Literature

PLT 1: Japanese Patent Publication No. 2008-127618
PLT 2: Japanese Patent Publication (A) No. 10-168596
PLT 3: Japanese Patent Publication (A) No. 2000-294250
PLT 4: Japanese Patent Publication (A) No. 10-112326
PLT 5: Japanese Patent Publication (A) No. 11-86869

### Summary of Invention

### Technical Problem

In general, the essential requirements of a metal foil as a material for a negative electrode collector of a lithium ion secondary battery are superior properties of: electrical conductivity, ease of surface processing of both of the front and back surfaces of the metal foil, adhesion with an active material, and, in turn, for processing, ultrasonic bondability of the collector terminal.
A copper foil has both electrical conductivity and ultrasonic bondability of the collector terminal among these essential requirements. However, there is still room for improvement in the surface shape and adhesion with the active material.

Therefore, a copper foil has been demanded which has a uniform shape at both of the front and back surfaces, particularly, enables sufficient realization of the properties of the silicon-based active material, for example, enables simultaneously achievement of high capacity and a large number of charge and discharge cycles in a lithium ion secondary battery, and is suitable for a negative electrode collector as well.

### Solution to Problem

According to the present invention, there is provided a surface-treated copper foil wherein a surface untreated copper foil as a base material, being provided with a first roughening layer made of copper metal by pulse cathode electrolytic plating in order to improve the adhesion with an active material, and a second copper-plating layer being provided on the surface of the first roughening layer by smooth copper plating in order to hold the adhered copper nodules.

Preferably, the active material includes the silicon-based active material, and the surface-treated copper foil is used as a copper foil for a negative electrode collector of a lithium ion secondary battery.

The base material made of the untreated copper foil is a rolled copper foil or rolled copper alloy foil made of oxygen-free copper, a rolled copper foil or rolled copper alloy foil, or a rolled copper foil or rolled copper alloy foil in which a plurality of through-holes fine enough to pass ions are formed.

Further, according to the present invention, there is provided a surface treatment method of a copper foil having the steps of forming, on a base material made of an untreated copper foil, a first roughening layer which enables adhesion with the active material made of metallic copper by pulse cathode electrolytic plating; and forming, on the surface of the first roughening layer, a second copper-plating layer by smooth copper plating.

Preferably, the surface treatment method further has a step of forming, on the surface of the second copper-plate layer, a third anti-rust layer of a corrosion inhibitor, and a step of forming, on the surface of the third anti-rust layer, a fourth protective layer of a coupling agent.

Further, according to the present invention, there is provided a copper foil for a negative electrode collector of a lithium ion secondary battery in which a first roughening layer made of metallic copper is provided on an untreated copper foil as a base material by pulse cathode electrolytic plating in order to raise adhesion with a silicon-based active material, a second copper-plating layer is provided on the surface of the first roughening layer by smooth copper plating in order to hold the adhered copper nodules, a third anti-rust layer of a corrosion inhibitor is provided on the surface of the second copper-plating layer, and a fourth protective layer of a coupling agent is provided on the surface of the third anti-rust layer.

### Advantageous Effects of Invention

According to the present invention, there is provided a surface-treated copper foil having superior properties of: electrical conductivity, ease of surface processing for both the front and back surfaces of the metal foil, adhesion with an active material, and further ultrasonic bondability, and a surface treatment method for the above copper foil.

Further, according to the present invention, there is provided a negative electrode collector of a lithium ion secondary battery having superior properties of: electrical conductivity, ease of surface processing for both of the front and back surfaces of the metal foil, adhesion with an active material, and further ultrasonic bondability.

### Brief Description of Drawings

[FIG. 1] A view explaining a first form of a first embodiment of the present invention.
[FIG. 2] A view explaining a second form of the first embodiment of the present invention.
[FIG. 3] A view illustrating a cross-sectional shape of a copper foil according to an embodiment of the present invention, in which FIG. 3(A) is a view illustrating a primary roughening layer a and FIG. 3(B) is a view further illustrating a secondary roughening layer b.
[FIG. 4] A view explaining a second embodiment of the present invention.
[FIG. 5] A view explaining a first form of a third embodiment of the present invention.
[FIG. 6] A view explaining a second form of the third embodiment of the present invention.

### Description of Embodiments

Embodiments of the present invention will be explained while illustrating a surface-treated copper foil which uses, for example, a silicon-based active material as an active material and is suitable for use in a collector electrode of a secondary battery, for example, a lithium ion secondary battery.
However, the surface treatment method and surface-treated copper foil of the present invention are not limited in application to the example explained above and examples which will be explained in detail below and can also be applied to the other applications which utilize the properties of the surface-treated copper foil of the present invention.

### Conditions Required To Copper Foil

The copper foil of an embodiment of the present invention, for example, the copper foil used for a collector of a secondary battery, is excellent in: electrical conductivity, ease of processing of both of the front and back surfaces of the foil, adhesion with a silicon-based active material, and in turn ultrasonic bondability of a collector terminal from a viewpoint of processing.

### First Embodiment

A surface treatment method of a copper foil and a surface-treated copper foil of a first embodiment of the present invention will be explained.

### Base Material

In the first embodiment of the present invention, as a base material which is to be surface treated, there is used a rolled copper foil made of copper not containing oxygen (oxygen-free copper) which is not surface treated (hereinafter, referred to as "untreated") (hereinafter, referred to as "untreated oxygen-free rolled copper foil").
When using the rolled copper foil made of oxygen-free copper, the ingot to be rolled to the copper foil will not contain impurities and the properties of the copper foil will not change. In particular, there is no apprehension of brittleness.

As a method of roughening the surface of the base material for use in, for example, a negative electrode collector of a lithium ion secondary battery, in order to raise adhesion with the silicon-based active material and improve bonding characteristics with a binder, it is important to make the roughness of the roughened surface low and excellent in uniformity, and makes the surface layer of roughening copper nodules smooth.
For this purpose, as the base material, there is preferably used an oxygen-free rolled copper foil comprised of an untreated oxygen-free rolled copper foil A wherein both surfaces have a shape roughness of 0.8 to 2.5 µm in terms of the surface roughness Rz prescribed in JIS-B-0601 and wherein an ordinary temperature elongation rate in a room temperature state, for example, 25°C, is 3.5% or more.
Further, as the rolled copper foil A, the oxygen-free copper foil which has an excellent electrical conductivity and has the value defined in IPC-TM-650 of 35 to 45 kN/cm² in range (in terms of Young's modulus, 50 to 65 MPa) is preferred.

As mechanical properties of the untreated oxygen-free rolled copper foil, preferably, a copper foil wherein the elongation rate in the ordinary temperature state, for example, 25°C, is 3.5% or more is employed. This is because, for example, it is necessary to maintain and follow the adhesion with respect to expansion and contraction of the silicon-based active material during charging and discharging of the lithium ion secondary battery.

In the copper foil of the first embodiment of the present invention, particularly, the heat resistance and plasticity followability at the time of the drying step of the layer coated and laminated with the silicon-based active material and during charging and discharging after assembly into the lithium ion secondary battery are stressed. Therefore, as the base material, as mechanical properties, for example, a Vickers Hardness Hv value of 80 to 110 in range is enough and a copper foil elongation rate (elongation property in the ordinary temperature state, same below) of 3.5% or more is sufficient. If such a copper foil, peeling off of the silicon-based active material or breakage of the collector, which occur due to remarkable plastic deformation due to the heat history, are hard to occur.

### Summary of Surface Treatment Step

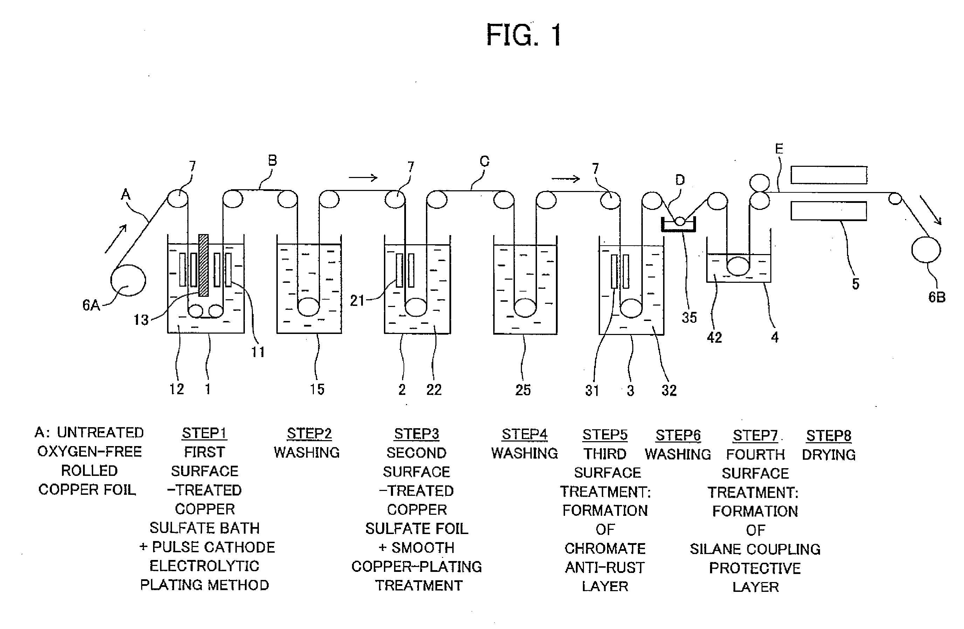

FIG. 1 is an explanatory view showing one form of the surface treatment step (process) of a copper foil for producing, for example, a copper foil for negative electrode collector use as a first embodiment of the present invention.

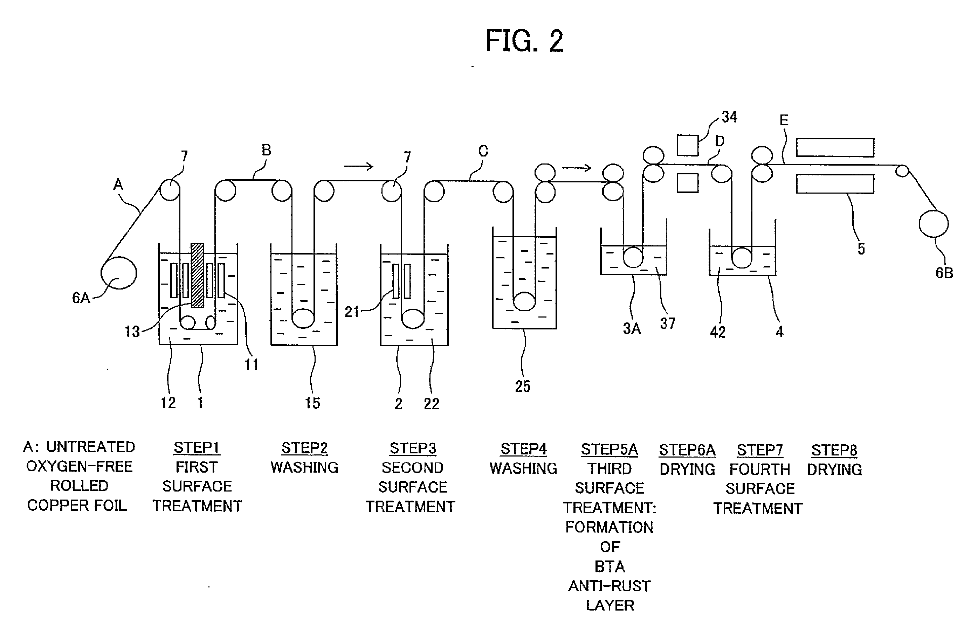

FIG. 2 is an explanatory view showing another form of the surface treatment step (process) of a copper foil for producing, for example, a copper foil used for negative electrode collector as a first embodiment of the present invention. It differs from the steps of FIG. 1 in only the rust-prevention of step 5A.

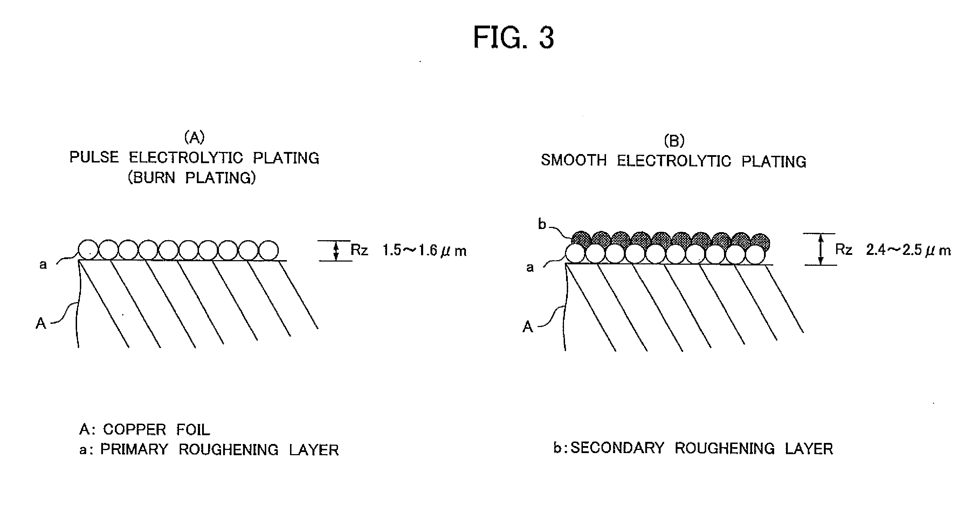

FIGS. 3(A) and 3(B) are enlarged views of one surface of the copper foil formed according to the surface roughening illustrated in FIG. 1 and FIG. 2.

### Surface Roughening (Steps 1 and 3)

The surface treatment of the first embodiment of the present invention is based on a first surface roughening (step 1) and a second surface roughening (or smoothening, step 3).
That is, the surfaces of the base material comprised of an untreated rolled copper foil A made of oxygen-free copper are treated by a pulse cathode electrolytic plating so as to uniformly roughen the surfaces of the untreated rolled copper foil A as illustrated in FIG. 3(A) (step 1), and are further treated by a smooth copper plating so as to smooth the roughened surfaces a as illustrated in FIG. 3(B) (step 3).

The "smooth plating" is understood as "capsule plating" using low current in order to hold a sound state of "dendritic copper nodules" which are burn plated by the first roughening, avoiding the detachment of the easily detachable "dendritic copper nodules".

### First Roughening (First Step)

That roughening includes, as the first roughening of step 1, the surface treatment, in a first roughening tank 1, of the surfaces of the base material of copper foil extremely low (poor) in roughness and uniformly by the pulse cathode electrolytic plating of copper nodules (first roughening, first step). That is, both surfaces of the untreated oxygen-free rolled copper foil illustrated in FIG. 3(A) (however, only one surface is shown in the illustration of FIG. 3(A)) are, for example, formed with layers a of uniform knobby copper nodules having a surface roughness Rz of about 1.5 to 1.6 µm.

### Second Roughening (Second Step)

Next, in a second copper plating tank 2, as step 3, in order to soundly maintain the layers a of copper nodules which are obtained by deposition of the individual knobby copper nodules to the surfaces by the first roughening, as illustrated in FIG. 3(B), a capsule copper layers b made by a smooth copper plating are adhered by the cathode electrolytic plating as the secondary roughening (second roughening or smoothening, third step).
Due to this smooth copper plating, the layers a of knobby fine nodules formed by the first roughening not only preserve the sound shape, but also keep the uniformity of the nodules.
The roughened surfaces of the copper foil after the second smooth copper plating are made a surface roughness Rz defined in Japan Industrial Standard: JIS-B-0601 of 3.0 µm or less, preferably 2.5 to 3.0 µm in range, more preferably 2.4 to 2.5 µm in uniform range, for use, for example, as the collector of the secondary battery.

The reasons for roughening the surfaces of the untreated rolled copper foil A are, for example, improvement of adhesion of the silicon-based active material mixed with binder with respect to the surfaces of the copper foil which is used as the collector of the secondary battery and uniform coating of a larger amount of silicon-based active material without dropout.
In this way, the surface roughened copper foil according to the first embodiment of the present invention is roughened (given relief shapes) to enable adhesion with the silicon-based active material mixed with a binder and enable uniform coating of a larger amount of active material without dropout.

### Anti-Rust Treatment (Step 5), Protective Layer Treatment (Step 7)

The surface treatment of the first embodiment of the present invention preferably further includes formation of an anti-rust layer (step 5, step 5A).
The surface treatment of the first embodiment of the present invention more preferably further includes formation of a protective layer (step 7).

### System Configuration and Steps

Referring to FIG. 1 to FIG. 3, a method of production of a copper foil for a negative electrode collector of the first embodiment of the present invention (method of surface treatment of a copper foil) will be explained in detail.

A rolled copper foil A taken up on a reel 6A is passed through a plurality of tanks which will be explained below for continuous surface-treatment and taken up by a take-up reel 6B.

### First Roughening (First Step)

As the base material, an untreated copper foil (electrolytically degreased rolled copper foil made of oxygen-free copper, hereinafter referred to as "the untreated rolled copper foil") A taken up on a reel 6A is prepared.
In the first roughening tank 1, two pairs of iridium oxide anodes 11 separated from each other across a shield plate 13, are arranged. Each pair is arranged with the anodes facing the two surfaces of the rolled copper foil A.
A copper-sulfuric acid electrolyte 12 flows in the first roughening tank 1 at a predetermined flowing speed. For example, the first roughening tank 1 is filled with the copper-sulfuric acid electrolyte 12 which is agitated at a predetermined flowing speed. Alternatively, the copper-sulfuric acid electrolyte 12 flows in a circulating laminar flow state, where it is supplied from the bottom of the first roughening tank 1 to cause overflow, at a predetermined flowing speed (hereinafter, referred to as a "first circulating laminar flow speed").

The untreated rolled copper foil A unwound from the reel 6A is guided to the first roughening tank 1. At the first roughening tank 1, its surfaces are formed with roughening copper nodule surfaces a by "pulse cathode electrolytic plating". That is, a pulse-shaped current is applied between a power supply contact roll 7 which the untreated rolled copper foil A contacts when conveyed by the take-up reel 6B, and the iridium oxide anodes 11, whereby the foil is intermittently electrolytically plated through the copper-sulfuric acid electrolyte 12 and the two surfaces of the untreated rolled copper foil A are formed with first roughening layers a made of the knobby fine roughening copper nodules illustrated in, for example, FIG. 3(A). Details of this pulse cathode electrolytic plating will be explained later.

A copper foil B comprised of the untreated rolled copper foil A at the two sides of which the first roughening layers a are formed in the first roughening tank 1 is washed in a washing tank 15 (step 2), then guided to a second copper-plating tank 2.

### Second Roughening (Step 3)

In the second copper-plating tank 2, a pair of iridium oxide anodes 21 are arranged positioned at the two sides of the copper foil B.
A copper-sulfuric acid electrolyte 22 flows in the second copper-plating tank 2 at a predetermined flowing speed. For example, the second copper-plating tank 2 is filled with the copper-sulfuric acid electrolyte 22 which is agitated at a predetermined flowing speed. Alternatively, the copper-sulfuric acid electrolyte 22 flows in a circulating laminar flow state, where it is supplied from the bottom of the second copper-plating tank 2 to cause overflow, at a predetermined flowing speed (hereinafter, referred to as a "second circulating laminar flow speed").
The smooth copper plating is carried out by a current supplied to the power supply contact roll 7 and the iridium oxide anodes 21. As illustrated in FIG. 3(B), smooth copper-plating layers (second copper-plating layers) b illustrated in FIG. 3(B) are formed through the copper-sulfuric acid electrolyte 22 on the two sides of the copper foil B which are formed with the first roughening layers a.

A copper foil C obtained by the smooth copper plating is washed in a washing tank 25 (step 4), and then guided to a third surface treatment tank 3.

### Formation of Anti-Rust Layers (Steps 5, 5A)

Next, as step 5, preferably the surfaces of the roughened surfaces of the copper foil after the second copper plating by step 3 are formed with anti-rust layers (third anti-rust layers) which are not shown in FIG. 3.
In the third surface treatment tank 3, anodes 31 made of stainless steel (SUS) are arranged.
In the third surface treatment tank 3, a chromate electrolyte 32 is filled. Chromate anti-rust layers are applied to the two sides of the copper foil C by plating by current supplied to the power supply contact roll 7 and the anodes 31.
The anti-rust layers may be a chromate corrosion inhibitor (FIG. 1, step 5) or an organic corrosion inhibitor (FIG. 2, step 5A).

The amount of deposition of chromium in the case of chromate rust-prevention is preferably set to, as coatings of an extent where the surfaces will not discolor to copper oxide, an amount of metallic chrome of, for example, 0.005 to 0.020 mg/dm².

In FIG. 2, unlike the treatment of step 5 illustrated in FIG. 1, in the third surface treatment tank 3A, anti-rust layers shown as step 5B are formed by an organic corrosion inhibitor, for example, BTA (benzotrizole). The result is similar to the treatment and apparatus explained with reference to FIG. 1.
The third surface treatment tank 3A is filled with a BTA solution 37. The two surfaces of the copper foil C are coated with BTA films and, further, are dried by a dryer 34 (step 6A) to thereby form anti-rust layers made of BTA.
When, for example, a BTA derivative is selected as the organic corrosion inhibitor, coatings of an extent where the surfaces will not discolor to copper oxide for 24 hours are formed under the conditions of a salt spray test defined in JIS-Z-2371 (concentration of salt water: 5% of NaCl and temperature of 35°C).

A copper foil D to which the chromate anti-rust layers (third anti-rust layers) are applied in the third surface treatment tanks 3 and 3A is washed in a washing tank 35 (step 6) and then guided to a fourth surface treatment tank 4.

### Formation of Protective Layers (Step 7)

The surfaces of the third anti-rust layers explained above are desirably provided with protective layers (fourth protective layers) comprised of chemically single molecules made from a silane coupling agent.
The fourth surface treatment tank 4 is filled with a silane coupling solution (agent) 42. The silane coupling agent is coated on the surfaces of the copper foil D on which the chromate anti-rust layers are formed.
The amount of deposition of the silane coupling agent is desirably made 0.001 to 0.015 mg/dm² as silicon.

A copper foil E on which the fourth protective layers (not shown in FIG. 3) are applied by the silane coupling agent in the fourth surface treatment tank 4 passes through a dryer 5 where it is dried (step 8) and is taken up around a take-up roll 6B.

Details of treatment of steps explained above will be explained.

### First Roughening (First Step)

The first roughening forms the layers a of knobby roughened nodules comprised of copper illustrated in FIG. 3(A) on the surfaces of the untreated oxygen-free rolled copper foil A. The first roughening layers a which are provided on the surfaces of the untreated rolled copper foil A are formed by the "pulse cathode electrolytic plating method" in the first roughening tank 1 using a copper-sulfuric acid bath using a copper-sulfuric acid electrolyte 12 to which an arsenic compound and/or metallic molybdenum is added.

### Pulse Cathode Electrolytic Plating Method

In order to determine the on-time (time of application of current) and off-time (time period stopping application of current) when performing the pulse cathode electrolytic plating, it is necessary to consider the copper concentration, sulfuric acid concentration, mean (average) current density, flowing speed of electrolyte, bath temperature, and treatment time. For setting them, empirically, it is confirmed that the equivalent or sounder treatment can be carried out by replacing the conditions which enable sound "burn plating" by DC electrolytic plating with those of pulse cathode electrolytic plating.

What is important in the pulse cathode electrolytic plating method is the maximum value (peak) of the current applied to the roll 7 and the anodes 11.
Usually, as the peak current value, approximately (sum of ratios of on-time and off-time) x (mean current value) flows at the on-time. The sum of the ratios of the on-time and the off-time is, for example, 5 when the on-time is 10 ms and the off-time is 40 ms, while the sum of the ratios is 7 when the on-time is 10 ms and the off-time is 60 ms.
In this case, if the flowing speed of the copper-sulfuric acid electrolyte 12 is slow and the supply of copper ions is insufficient or on the other hand the flowing speed of the copper-sulfuric acid electrolyte 12 is fast and the supply of copper ions is excessive, sound "burn plating" cannot be carried out. Therefore, the treatment is carried out by setting a bath of copper concentration with great ease of management of the copper-sulfuric acid electrolyte 12 and controlling mean current density, flowing speed, bath temperature, and treatment time.

As the mean current density, the general practice is to set the current value when performing "DC electrolytic plating" enabling sound "burn plating" at the above set bath temperature. Therefore, if employing that, preferably, as both of the bath temperature and the treatment time (current supply time), the values when performing the "DC electrolytic plating" are used. For example, the treatment time is 2.5 to 50 seconds.
The flowing speed of the copper-sulfuric acid electrolyte 12 need only be one that enables a supply of copper ions which enables the sound burn plating limit current density to be tracked. Therefore, a speed of about half of the speed of conveyance of the copper foil A is sufficient. For example, when the speed of conveyance is 6 to 12 m/min, the flowing speed becomes 3 to 6 m/min.

Note that, in the case of employing the pulse cathode electrolytic plating, the supply of copper ions at the time of peak current becomes important. Theoretically, the flowing speed of the copper-sulfuric acid electrolyte 12 higher than the speed of conveyance of the copper foil is needed. However, the copper ions are supplied even at the off-time, therefore it is not necessary to make the flowing speed of the copper-sulfuric acid electrolyte 12 higher as the sum of the ratio of the on-time becomes larger. Practically, if the flowing speed of the copper-sulfuric acid electrolyte 12 is about a half of the speed of conveyance of the copper foil in the case of employing the DC electrolytic plating, treatment is possible.

In determination of the on-time and off-time, in a laboratory, it was found that ratio of the on-time and the off-time, that is, on-time/off-time, has to be 1:4 to 1:6 in range.
If the on-time/off-time is less than 1:1 to 1:4 in range, there is no great difference from cathode electrolytic plating (smooth electrolytic plating). On the other hand, when exceeding the above range, the peak current becomes high, the burn plating forms extremely dendritic pointed shapes, dropout becomes conspicuous, dropout ends up occurring into the first roughening tank 1, and thus sound burn plating is not maintained.

### Concrete Examples

For example, the speed of conveyance was set to 6 to 12 m/min, the flowing speed of the copper-sulfuric acid electrolyte 12 (speed of the first circulating laminar flow) was set to 3 to 6 m/min, and the electrolysis time was set to 2.5 to 5.0 seconds.

### Copper-Sulfuric Acid Electrolyte

As the copper-sulfuric acid electrolyte 12, for example, an electrolytic solution obtained by mixing copper sulfate in 20 to 30 g/liter as copper, a sulfuric acid in a concentration of 90 to 110 g/liter as H₂SO₄, sodium molybdate in 0.15 to 0.35 g/liter as Mo, and chlorine in 0.005 to 0.010 g/liter converted to chlorine ions was used. The bath temperature was set to 18.5 to 28.5°C.

### Pulse Cathode Electrolytic Plating

The density of the pulse-like current which is applied between the power supply contact roll 7 and the iridium oxide anodes 11, that is, the pulse cathode electrolytic plating current density, is set to, for example, 22 to 31.5 A/dm².
Note that, as explained above, the peak current density (current density in the on-time) is determined according to the on-time, off-time, and pulse cathode electrolysis mean plating current density.
While the value is not particularly limited, for example, the on-time can be set to 10 to 60 ms. For example, when the on-time is made 10 ms, preferably the peak current density is set to become 157.5 A/dm² or less, more preferably 154 to 157.5 A/dm² in range

With the suitable flowing speed of the copper-sulfuric acid electrolyte 12 explained above and suitable distance between the iridium oxide anodes 11, under the above electrolysis conditions, a layer a of sound knobby roughening copper nodules (see FIG. 3(A)) is formed on the surfaces of the untreated oxygen-free rolled copper foil A.
The surface roughness Rz of the roughening layers a is, for example, 1.5 to 1.6 µm.
Next, the first roughened copper foil B is moved to the second treatment tank 2.

In order to prevent the above knobby copper roughening nodules from dropping out into the same bath of the first roughening tank 1, according to need, after the pulse cathode electrolytic plating, the same treatment as that in the method which will be explained later can be used for electrolytic plating by smooth copper in the first roughening tank 1 under conditions setting the density of the current applied between the power supply contact roll 7 and the iridium oxide anodes 11 to about 15 to 20 A/dm².

### Third Step (Second Roughening)

In the second treatment tank 2, smooth copper-plating is applied for the purpose of preventing the layers a of fine copper roughening nodules deposited on the surfaces of the copper foil A in the first roughening tank 1 from dropping out from the tops of the copper foil surfaces and for the purpose of adjusting the surface shapes of the individual fine copper roughening nodules and adjusting the surface areas to be small and uniform.

### A concrete example will be explained next.

### Copper-Sulfuric Acid Electrolyte 22

As the electrolyte 22 in the second treatment tank 2, for example, there was used one containing copper sulfate in an amount of 35 to 55 g/liter as copper and sulfuric acid in a concentration of 90 to 110 g/liter as H₂SO₄. The bath temperature was set to 35 to 55°C.

### Smooth Electrolytic Plating Conditions

The density of the cathode electrolytic plating current which is continuously applied between the roll 7 and the anodes 21 was set to 15 to 20 A/dm².

With a suitable flowing speed of the electrolyte 22 and a suitable distance between the iridium oxide anodes 21, a smooth copper plating layer is formed on the surface of the first roughening layer (fine copper roughening nodules).
For example, the speed of conveyance of the copper foil is the same as the speed of conveyance in the first step, for example, 6 to 12 m/min, and the second circulating laminar flow speed is 3 to 6 m/min.
The electrolysis time is defined by (current density x treatment time = smooth plating amount) because the plating is smooth plating, and is, for example, about 3.75 to 7.5 seconds.

The roughness Rz of the final roughened shapes after the smooth plating in this case is made a surface roughness Rz defined in JIS-B-0601 of 3.0 µm or less for both surfaces of the copper foil, preferably 2.3 to 3.0 µm in range, more preferably 2.4 to 2.5 µm in range.

By the smooth copper plating, when using the surface-treated copper foil E as the collector of the secondary battery, it is possible to avoid defects in charging and discharging due to dropout of copper nodules, unintentional deposition at the separator in the secondary battery, and abnormal electrodeposition together with a lithium compound used for the positive electrode of the secondary battery.

### Formation of Anti-Rust Layers (Steps 5, 5A)

The surfaces of the copper foil C finished according to the treatment of step 3 to an Rz equal to 3.0 µm or less preferably is provided with third anti-rust layers performing dipping in a chromate corrosion inhibitor or cathode electrolytic plating to thereby raise the rust prevention power of the surface-treated copper foil.

The thickness of the coatings in the case of the chromate treatment is preferably within, for example, 0.005 to 0.025 mg/dm² in range as the amount of chromium metal. If within this range of amount of deposition, the surface does not discolor to copper oxide for up to 24 hours under the conditions of the salt spray test defined in JIS-Z-2371 (concentration of salt water: 5% of NaCl and temperature of 35°C).

For formation of the anti-rust layers, even among the organic corrosion inhibitors represented by BTA, ones excellent in heat resistance in their derivative compounds are commercially available and can be suitably selectively used. Incidentally, in the case of employing organic corrosion inhibitors, for example, coatings obtained by dipping in a bath containing 5.0 wt% (percent by weight) of product number C-143 of Chiyoda Chemical Co., Ltd. and adjusted to 35 to 40°C, then drying can give a rust prevention effect comparable to chromate treatment.

### Formation of Protective Layer (Step 7)

The surfaces of the chromate treated copper foil D are preferably suitably coated with a silane coupling agent (fourth protective layers).
By the silane coupling agent treatment, particularly the adhesion and bondability with the binder mixed in the silicon-based active material can be raised.
The coupling agent is suitably selected according to the active material concerned. However, in the first embodiment of the present invention, particularly preferably an epoxy-based, amine-based, or vinyl-based coupling agent which is excellent in affinity with silicon-based active materials is selected. A coupling agent having a "double bond" or "azo compound" in its structural formula is rich in cross-linking reaction and is excellent in adhesive effect, so is preferred.

In the first embodiment of the present invention, while the grade and type are not limited, in order to at least chemically improve the adhesion, the amount of deposition of the silane coupling agent which is coated on the roughened surfaces of the copper foil is preferably, for example, 0.001 to 0.015 mg/dm² in range as silicon.

### Examples and Comparative Examples

Below, examples based on embodiments of the present invention and comparative examples will be explained.

### Example 1

As the base material, the untreated rolled copper foil A made of an oxygen-free rolled copper A and having a thickness of 0.018 mm which has a surface roughness of 0.8 µm in terms of the surface roughness Rz defined in JIS-B-0601 and has an elongation rate at ordinary temperature (for example 25°C) of 6.2% was used. The two surfaces of this copper foil were roughened under the following conditions.
This roughening was divided into, separated by the shield plate 13, treatment which roughens the front surface of the copper foil from the inlet of the first roughening tank 1 to the bottom side and roughening treatment for the back surface of the copper foil from the bottom to the outlet side of the tank. For the current which is supplied to the power supply contact roll 7 and iridium oxide anodes 11, the on-time was set to 10 ms and the off-time to 60 ms (sum of ratios of the on-time and off-time is 7. The copper foil A was made to move by the speed of conveyance explained above while performing the first roughening by pulse cathode electrolytic plating to provide the two surfaces with the first roughening layers a.

The reason for dividing the pulse cathode electrolytic plating into two as described above is to reliably obtain the effect of setting the on-time and the off-time. With treatment of the two surfaces by the limited flowing speed in the first roughening tank 1, when the applied current reaches the peak current, the supply of copper ions becomes insufficient at both surfaces of the copper foil A and the problem of uneven roughening occurs. This is to avoid that.

Next, as the smooth copper plating in the second copper-plating tank 2, DC current was continuously applied to the roll 7 and the anodes 21 to simultaneously form second roughening layers by the DC electrolytic capsule plating at the surfaces of the first roughening layers at the two sides from the inlet of the second copper-plating tank 2 to the bottom side.

In Examples 1 to 4 and Comparative Examples 1 to 5, the cathode electrolytic plating conditions will be separately described for the "pulse cathode electrolytic plating" in the first step and the "DC cathode electrolytic plating" in the third step.

**Table 1**

| Conditions 1, Composition of Bath Forming First Roughening Layer (Copper-Sulfuric Acid Electrolyte 22) and Treatment Conditions | |
|---|---|
| Copper sulfate | 23.5 g/liter as metallic copper |
| Sulfuric acid | 100 g/liter |
| Sodium molybdate | 0.25 g/liter as molybdenum |
| Hydrochloric acid | 0.002 g/liter as chlorine ions |
| Ferric sulfate | 0.20 g/liter as metallic iron |
| Chromium sulfate | 0.20 g/liter as trivalent chromium |
| Bath temperature: | 25.5°C |
| Pulse cathode electrolysis on-time | 10 ms |
| Pulse cathode electrolysis off-time | 60 ms |
| Pulse cathode electrolysis mean plating current density | 22.5 A/dm² |

**Table 2**

| Conditions 2, Second Smooth Copper-Plating Layer Forming Conditions, Copper-Sulfuric Acid Electrolyte 22 | |
|---|---|
| Copper sulfate | 45 g/liter as metallic copper |
| Sulfuric acid | 110 g/liter |
| Bath temperature | 50.5°C |
| DC cathode electrolytic plating current density | 18.5 A/dm² |

### Conditions 3, Anti-Rust Layer Forming Conditions

As rust-proofing, anti-rust layers were formed by dipping in a chromate bath containing 3 g/liter of CrO₃ and then drying.

### Conditions 4, Protective Layer Forming Conditions

After that, an epoxy-based silane coupling agent (Sila-ace S-510 made by Chisso Corporation) adjusted to 0.5 wt% was coated on the second roughening layers to form thin films.

### Measurement Conditions and Results and Evaluation Method

The surface roughness of the surface-treated copper foil which was obtained under the above conditions was measured by Rz defined in JIS-B-0601 and is shown in Table 3.
The uniformity of the roughening was evaluated as follows.
First, the surface-treated copper foil E was cut into a 250 mm square piece. On both of the roughened surfaces, commercially available polyphenylene ether (PPE) resin-based substrate (corresponding to MEGTRON-6 prepreg made by Panasonic Corporation) was superposed and hot-pressed to form a double-sided copper clad multilayer board. This was peeled apart. The uniformity of roughening was evaluated from the state of adhesion as described below.

For the uniformity of roughening, the peel strength was measured according to the measurement method defined in JIS-C-6481 used for measurement of the peel adhesion with the substrate.
In the evaluation (dispersion chart evaluation), a case of peeling without a "difference" between the maximum value and the minimum value in the measurement chart (that is, where the chart was straightly drawn without fluctuation) was considered as excellent in roughening uniformity and was evaluated as "Very good". If the fluctuation in the chart was within 0.02 kg/cm, it was evaluated as "Good". A case within 0.05 kg/cm was evaluated as "Fair", and a case exceeding 0.05 kg/cm was evaluated as "Poor".
The numerical value dispersion of these adhesive strengths is described in Table 3.

The presence of abnormal roughening was evaluated by visual observation of the degree of remaining copper (on the substrate surfaces after full surface etching) through an optical microscope.
The remaining copper was described in Table 3 with the case, after etching the surfaces of the copper clad laminated board, where no remaining copper at all was seen per unit area (0.5 mm x 0.5 mm) evaluated as "Very good", a case where almost none was seen as "Good", a case where some was seen as "Fair", and a case where a remarkable amount was seen as "Poor".

### Example 2

In Example 2, as the base material, there was used copper foil comprised of untreated rolled copper foil made of oxygen-free copper and having a thickness of 0.018 mm with a surface roughness of the two surfaces of the copper foil of 2.5 µm in terms of the surface roughness Rz defined in JIS-B-0601 and with an ordinary (atmosphere) temperature elongation rate of 6.2%.
That is, this differs from Example 1 in the surface roughness of the base material. Otherwise, the roughening was applied under the same conditions as applied in Example 1. The roughening and surface treatment were carried out so that the surface roughness of the second copper-plating layers became 3.0 µm or less in terms of the surface roughness Rz. Similar evaluation and measurement as those in Example 1 were carried out.
The results are shown in Table 3.

### Example 3

As the base material, there was used an oxygen-free copper-rolled foil (produced by Furukawa Electric Co., Ltd.) having a thickness of 0.018 mm, an ordinary temperature elongation rate of 3.6%, and a surface roughness of 0.8 to 1.1 µm in terms of Rz.
That is, this differs from Examples 1 and 2 in the surface roughness of the base material. Otherwise, the same roughening and surface treatment as those in Example 1 were carried out. Similar evaluation and measurement as those in Example 1 were carried out.
The results are shown in Table 3.

### Example 4

As the base material, the untreated rolled copper foil used in Example 1 was used. The off-time at the time of pulse cathode electrolytic plating under the first roughening conditions was made 40 ms. Otherwise, roughening and surface treatment similar to Example 1 were carried out. Roughening and surface treatment similar to those in Example 1 were carried out so that the roughness of the obtained surface treated side became 3.0 µm or less in terms of Rz. Similar evaluation and measurement as those in Example 1 were carried out.
The results are shown in Table 3.

### Comparative Example 1

As the base material, the untreated rolled copper foil made of oxygen-free copper used in Example 1 was used. The two surface sides were treated by DC cathode electrolysis by a bath composition of the copper-sulfuric acid electrolyte 2 similar to Example 1 in place of pulse cathode electrolytic plating. The roughness of both of the front and back roughened surfaces obtained became 3.0 µm or less in terms of Rz. Otherwise, the same treatment as that in Example 1 was applied. Similar evaluation and measurement as those in Example 1 were carried out.
The results are shown in Table 3.

### Comparative Example 2

As the base material, the untreated rolled copper foil used in Example 2 was used. This was treated in the same way as Comparative Example 1. Otherwise, similar evaluation and measurement as those in Example 1 were carried out. The results are shown in Table 3.

### Comparative Example 3

As the base material, the untreated rolled copper foil used in Example 3 was used. This was treated in the same way as Comparative Example 1. Otherwise, similar evaluation and measurement as those in Example 1 were carried out. The results are shown in Table 3.

### Comparative Example 4

As the base material, untreated copper foil of MP-18 µm of columnar crystals formed into a middle profile (MP) shape classified by the IPC standard according to the electrolytic foil forming conditions was used. To the matte surface side (Rz of electrodeposition solution side of 3.8 µm), treatment and evaluation and measurement similar to those of Comparative Example 1 were carried out by DC electrolysis. The results are shown in Table 3.

**Table 3**

| | | Roughness before treatment , Rz value [µm] | Roughness after roughenin g, Rz value [µm] | Adhesive strength, average peel value [kg/cm] | Adhesive strength, dispersion chart evaluation | Visual evaluation of extent of remaining copper |
|---|---|---|---|---|---|---|
| Example 1 | Glossy surface side | 1.2 | 2.85 | 0.71 | Very good | Good |
| | Matte surface side | 0.8 | 2.55 | 0.65 | Very good | Very good |
| Example 2 | Glossy surface side | 2.5 | 2.95 | 0.73 | Good | Good |
| | Matte surface side | 0.8 | 2.50 | 0.68 | Very good | Very good |
| Example 3 | Glossy surface side | 0.8 | 2.60 | 0.65 | Very good | Very good |
| | Matte surface side | 0.8 | 2.60 | 0.62 | Very good | Very good |
| Example 4 | Glossy surface side | 1.2 | 2.90 | 0.75 | Good | Fair to Good |
| | Matte surface side | 0.8 | 2.70 | 0.70 | Good | Good |
| Comparative Example 1 | Glossy surface side | 1.2 | 2.90 | 0.88 | Fair to Good | Poor to Fair |
| | Matte surface side | 0.8 | 2.75 | 0.78 | Good | Fair |
| Comparative Example 2 | Glossy surface side | 2.5 | 3.00 | 1.05 | Fair | Poor to Fair |
| | Matte surface side | 0.8 | 2.70 | 0.75 | Fair | Fair |
| Comparative Example 3 | Glossy surface side | 0.8 | 2.85 | 0.83 | Fair to Good | Fair |
| | Matte surface side | 0.8 | 2.70 | 0.75 | Fair to Good | Fair |
| Comparative Example 4 | Glossy surface side | 1.8 | 2.95 | 0.95 | Fair | Poor to Fair |
| | Matte surface side | 3.8 | 5.25 | 1.48 | Poor to Fair | Poor |

As clear from Table 3, the surface-treated copper foils of Examples 1 to 4 had surface roughnesses of the same degree at both of the front and back and had roughening characteristics of the two surfaces not different from each other.
From such an evaluation, even when those surface-treated copper foils were used as, for example, collectors of lithium ion secondary batteries and silicon-based active materials were coated, pressed, and dried on those surfaces to thereby form negative electrode collectors, the silicon-based active materials could be laminated to uniform thicknesses. The lithium ion secondary batteries using the laminates as negative electrodes were excellent in the charge and discharge properties and had long service lives.
In particular, Examples 1 to 3 had good evaluation results. It was seen that it is more preferable to set the on-time of the charging current of the pulse electrolytic plating in the first roughening to 10 ms and the off-time to 60 ms.

Compared with Examples 1 to 4, the copper foils of Comparative Examples 1 to 3 had roughnesses Rz of the same degree in Examples 1 to 4 and had higher adhesive strengths than the examples, but the adhesive strengths were different between the front and the back of the copper foils and the results were not satisfactory in the point of the remaining copper as well.
The surface-treated copper foils of the comparative examples were used as collectors of lithium ion secondary batteries. The surfaces were coated, pressed, and dried with silicon-based active materials. However, they were not satisfactory from the viewpoint of thickness uniformity as negative electrode collectors. The lithium ion secondary batteries using those laminates as negative electrodes were inferior in the charge and discharge properties, and their lives were short as well.

In Comparative Example 4, the roughnesses were greatly different between the front and back surfaces of the untreated electrolytic copper foil used as the base material, therefore the roughened states of the two surfaces could not be made the same, so the adhesive strengths were greatly different between the front and the back.
Further, the surface shapes of the front and back surfaces of the surface-treated copper foil differed, therefore the silicon-based active materials could not be laminated on the front and back surfaces to the same thicknesses, so a potential difference was caused. If a difference of potential occurs as described above, for example, if configuring a circuit by combining a plurality of secondary batteries in series or in parallel, an inconvenience occurs in the charge and discharge efficiency of the secondary batteries, and thus the properties as a collector could not be satisfied.

As explained above, in the first embodiment of the present invention, as the base material, oxygen-free rolled copper foil was used. As the first roughening, the surfaces were roughened by pulse cathode electrolytic plating. Further, the surfaces were treated by smoothening. The copper foil could be produced with approximately the same properties at the two surfaces of the copper foil.
Accordingly, for example, the foil is suitable for the collector for a lithium ion secondary battery.
Further, the negative electrode obtained by copper foil which is surface treated by the first embodiment of the present invention has the excellent effects of avoiding problems in the potential of the lithium ion secondary battery and giving longer charge and discharge cycles.

In this way, the surface-treated copper foil of the present first embodiment can satisfy the demands for higher capacity and longer charge and discharge cycles of lithium ion secondary batteries even when, for example, the collector of the lithium ion secondary battery has a silicon-based active material having a unique hardness and large expansion and contraction between nodules during charging and discharging adhered to it.

The copper foil of this embodiment of the present invention is excellent in electrical conductivity, ease of processing of both of the front and back surfaces of the foil, and adhesion with a silicon-based active material. It is not limited to copper foil for the negative electrode collector of a lithium ion secondary battery and can be applied to various other applications as well.
Further, from a viewpoint of processing, the copper foil is excellent in ultrasonic bondability of the collector terminal and can be applied to various applications requiring these properties.

### Second Embodiment

### Base Material

The base material of the second embodiment of the present invention differs from the base material of the first embodiment, and is used a perforated surface-untreated copper foil or a perforated surface untreated copper alloy foil, in which through holes are perforated.
Below, when it is not necessary to express the difference between the copper foil and the copper alloy foil, they will be simply expressed as "untreated copper foil" or "copper foil".

As the perforated surface-untreated copper foil, there can be used either electrolytic copper foil or rolled copper foil.
As the perforated surface-untreated copper alloy foil, any alloy containing copper as the principal ingredient can be employed. As the copper alloy foil, particularly, a copper-tin alloy is preferably employed. More preferable, there can be employed a copper-tin alloy in which the content of tin is 0.15% or less, and of which the conductivity is 85%IACS or more, namely, in which the conductivity of pure copper is 85% or more.

When the surface-untreated electrolytic copper foil or the surface-untreated electrolytic copper alloy foil is employed for the base material, as such the copper foil, preferably, there may be employed a copper foil in which a surface roughness of the front and back of the base material, before forming through holes is 0.8 to 2.5 **µm** in range as a surface roughness Rz defined in JIS-B-0601. It is preferably that the above electrolytic copper foil is in a state where the electrodeposited crystal grains at the time of foil formation are extremely fine nodules, and the cross-section on a matte surface side of the electrolytic copper foil has a fine grain-state crystal structure.
This is because that the electrolytic copper foil having such a crystal structure has an elongation rate of 3.5% or more at an ordinary temperature, for example, 25°C, and has a sufficient followability with respect to thermal expansion and contraction even at a press temperature (150 to 180°C) at the time when pressing and hot laminating the silicon-based active material when considering, for example, application to a lithium ion secondary battery.

The reason why that the mechanical characteristic of the surface-untreated electrolytic copper foil used as the base material before formation of through holes having preferably the elongation rate of 3.5% or more at the ordinary temperature, is that, as explained in the first embodiment as well, the adhesion with the silicon-based active material is maintained against expansion and contraction of the silicon-based active material during charging or discharging after the active material is coated on the perforated roughened copper foil surfaces and the foil is used as an electrode for assembly of a secondary battery and that a suitable following characteristic with respect to the heat history is secured.

In the case where the base material is surface-untreated rolled copper foil or surface-untreated rolled copper alloy foil, the copper foil having a surface roughness Rz of 1.5 **µm** or less for both of the two surfaces of the copper foil, is preferably employed.
In the case where the base material is surface-untreated rolled copper foil, a copper foil formed by rolling oxygen-free copper or a copper alloy ingot containing tin, is preferably employed. The fact that oxygen-free copper is preferred was explained in the case of employing the base material in the first embodiment.
The property of the surface-untreated rolled copper foil or surface-untreated rolled copper alloy foil before perforation is preferably a value defined in IPC-TM-650 of 35 to 45 kN/cm² in range (if Young's modulus, 50 to 65 MPa).

### Roughening Process

The perforated roughened copper foil, when considering application to the secondary battery, is treated, in order to strengthen the adhesion with a silicon-based active material and maintain hold a larger amount of active material uniformly without dropout, at the two surfaces of the copper foil by treatment similar to the first step in the first embodiment so as to form first roughening layer a (see FIG. 3(A)) of extremely low roughness comprised of uniform knobby copper nodules or copper alloy nodules, that is, by pulse cathode electrolytic plating.
Then, in order to keep the first roughening layer treated by the first roughening sound, the first roughening layer is treated by similar treatment as step 3 in the first embodiment so as to smoothly apply plating (cathode electrolytic plating) layer b (see FIG. 3(B)) by a plating solution having the same ingredients as the nodules used in the first roughening and thereby provide smooth secondary treated layer (capsule plating layers). The knobby fine nodules of the second roughening layer provided by the smooth plating maintain the first roughening layer sound in shape and achieve uniformity of nodules and prevention of dropout. The roughening surfaces after the smooth plating are preferably controlled to a surface roughness Rz defined in JIS-B-0601 of not more than 3.0 µm, preferably 2.5 to 3.0 µm in range.

### Formation of Anti-Rust Layers

Preferably, in the same way as explained in the first embodiment, anti-rust layers are provided on the surfaces of the roughening surfaces after the secondary smooth plating.
The anti-rust layer may be chromate anti-rust or organic anti-rust layers like in the first embodiment.

### Formation of Protective Layers

Further, preferably, in the same way as explained in the first embodiment, protective layers comprised of single molecules of a coupling agent are provided on the surfaces of the anti-rust layers.

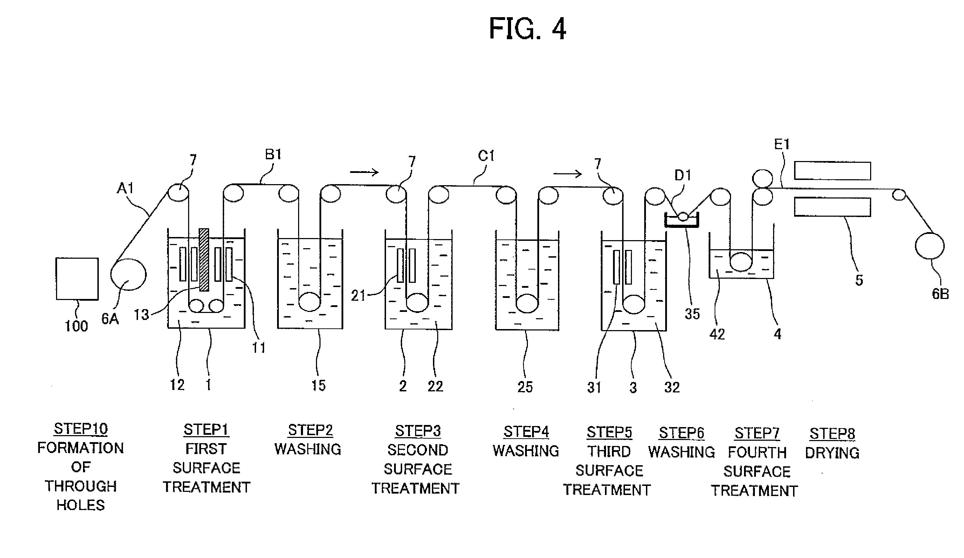

Referring to FIG. 4, a method of production (method of surface treatment) of the perforated roughened copper foil of the second embodiment of the present invention will be explained.

### Perforation

First, the case where the base material is copper foil will be explained.
As one example of the base material, the surface-untreated copper foil is formed with a large number of through holes penetrating through the copper foil by a punching machine 100.
The perforated copper foil of the second embodiment of the present invention also, as explained as the first embodiment, is required to have suitable mechanical characteristics since heat resistance and plasticity followability are stressed at the time of the drying step of the layer coated and laminated with the active material and during charging and discharging after being assembled in the secondary battery. For example, the value of the Vickers hardness Hv is preferably 80 to 110 or so in range, and the elongation rate at the ordinary temperature is preferably 3.5% or so or more.

If such a perforated copper foil, unless the aperture ratio exceeds the maximum 55%, peeling-off of the active material caused due to the remarkable plastic deformation resulting from the heat history and breakage of the copper foil when used as a collector do not occur.
The aperture ratio means the ratio of the total areas of the opening portions with respect to the area of the surface-untreated copper foil before forming a large number of through holes.

The area of the opening portion of one through hole is preferably an area large enough to pass lithium ions, for example, is 0.01 mm² or less.
When the area of the opening portion of one through hole is 0.01 mm² or less, the opening portion is closed by the roughening of step 1. However, a gap through which lithium ions can pass remains. Due to this, even when there is a difference in the amount of deposition of the active material between the two surfaces of a collector, the stored amount of the active material as a whole can be utilized to the maximum limit without restriction to the stored amount of lithium at the side of the smaller deposition amount.
If the area of the opening portion of one through hole is larger than 0.01 mm², the active materials are linked between the front and back surfaces. This is effective for the power collection characteristic. On the other hand, however, if there is a brittle location at the opening portion, a crack is sometimes formed around the copper foil opening portion due to expansion and contraction of the active material during charging and discharging.

### First Roughening (Step 1)

In the same way as the treatment of step 1 in the first embodiment, surface-untreated copper foil A1 having through holes formed in it is guided to the first roughening tank 1 where pulse cathode electrolytic plating is used to form surfaces of roughening copper nodules and thereby first roughening layer a (see FIG. 3(A)) comprised of knobby fine roughening nodules made of copper nodules are formed on the two surfaces of the copper foil A1.

Copper foil B1 having the first roughening layer a formed on it is washed in a washing tank 15 (step 2), then guided to a second copper-plating tank 2.

### Second Roughening(Step 3)

In the second copper-plating tank 2, the smooth copper-plating layers b are applied as step 3 in the first embodiment in the same way as the method explained above.

The copper foil C1 subjected to the smooth plating is washed in a washing tank 25 (step 4), then guided to a third tank 3.

### Formation of Anti-Rust Layers (Step 5, Step 5A)

In the third surface treatment tank 3, the same method as that explained above as step 5 in FIG. 1 or step 5A in FIG. 2 is used to form chromate anti-rust layers.

The copper foil D1 having the chromate anti-rust layers provided on it in the third surface treatment tank 3 is washed in a washing tank 35 (step 6), then guided to a fourth surface treatment tank 4.

### Formation of Protective Layers (step 7)

In the fourth surface treatment tank 4, a silane coupling agent is coated on the surfaces of the copper foil D1 by the same method as the treatment explained above as step 7 in the first embodiment.

The copper foil E1 on which the silane coupling agent is coated in the fourth surface treatment tank 4 passes through a dryer 5 and is taken up around a take-up roll 6B.

### Case Where Base Material is Copper Alloy Foil

The above roughening process is the process for the case where the base material is copper foil.
When the base material is a copper alloy foil, the first roughening and second roughening may be carried out by the processing described above as well. However, depending on the copper alloy foil, sometimes roughening by the same alloy as the copper alloy is preferred.
When roughening of an alloy composition the same as that for the surface-untreated copper alloy foil A1 is applied, the first roughening tank 1 is filled with a copper-sulfuric acid electrolyte 12, containing copper as a principal ingredient, obtained by suitable dissolution of the same type of metal as the copper alloy foil. In the first roughening tank 1, first roughening layer comprised of knobby fine roughened nodules made of copper alloy nodules are formed on the two surfaces of the copper alloy foil A1.

### Case Where Base Material is Electrolytic Copper Foil

When an electrolytic copper foil is used as the surface-untreated perforated copper foil A1, in order to better improve the properties of the silicon-based active material and properties of the secondary battery, a double-sided glossy electrolytic copper foil exhibiting a smooth surface shape is more preferred than an electrolytic copper foil having a crystal structure comprised of columnar crystal grains. One having front and back surface roughnesses after the electrolytic foil formation of 0.8 or more, but less than 2.5 sun in terms of the surface roughness Rz defined in JIS-B-0601 is preferred.

### Case Where Base Material is Rolled Copper Foil or Rolled Copper Alloy Foil

When the base material is a rolled copper foil or rolled copper alloy foil, preferably there can be used an oxygen-free copper material (OFC material).

As the base material, without distinction as to being an electrolytic copper foil, rolled copper foil, or copper alloy foil, the elongation rate of the base material at the ordinary temperature is preferably 3.5% or more.

### Case Where Base Material is Perforated Copper Foil Which is Not Alloy Foil

When the base material is a perforated copper foil which is not an alloy foil, the first roughening provided at the two surfaces of the copper foil is applied by a pulse cathode electrolytic plating method using a copper sulfate bath of a copper-sulfuric acid electrolyte 22 to which a silicon-based compound or metallic molybdenum is added in the first roughening tank 1.

### Examples and Comparative Examples

Examples and comparative examples of the second embodiment will be explained next.
In Examples 5 to 8 and Comparative Examples 5 to 9, the cathode electrolytic plating conditions will be described separately for the "pulse cathode electrolysis" in the first step and the "DC cathode electrolysis" in the second step.

### Example 5

As the base material, the surface-untreated electrolytic copper foil of a thickness of 0.018 mm with a liquid surface side also formed to a mirror surface by the electrolytic foil formation conditions was punched by a punching machine 100 to form holes of diameters of 50 µm and give an aperture ratio of 55% to thereby prepare "perforated electrolytic copper foil".
Electrolytic copper foil before perforation with a shape roughness on the matte surface side (electrodeposition solution surface side) of 0.8 µm in terms of the surface roughness Rz defined in JIS-B-0601, with a surface roughness Rz on the glossy surface side (drum surface side) of 1.2 turn, and with an ordinary temperature elongation rate of 6.2% (double-sided glossy electrolytic copper foil produced by Furukawa Electric Co., Ltd.) was used. The two surfaces of this copper foil were roughened under the following conditions.

Note that, in the same way as Example 1 in the first embodiment, the roughening was divided, across a shield plate 13, into roughening of the matte surface side (electrodeposition solution surface side) from the inlet to the bottom side of the first roughening tank 1 and of the glossy surface side (drum peel surface side) from the bottom to the outlet side of the first roughening tank 1 so as to thereby roughen the two surfaces of the copper foil.

The reason for dividing the pulse treatment into two operations is to avoid breakage of the copper foil A or problems with elongation in the first roughening tank 1 because the foil is perforated copper foil and therefore the heat generation at the time of a peak current becomes larger than a non-perforated copper foil. In addition, this is because the treatment is the pulse cathode electrolytic plating, so the on-time and off-time of the current to be applied to the iridium oxide anode 11 is made to be individually settable so as to make the surface roughnesses by the finish roughening of the two surfaces of the foil match.

Next, for smooth copper plating, second roughening by the DC cathode electrolytic plating was simultaneously applied to the two surfaces from the inlet to the bottom side of the second copper-plating tank 2.

Conditions 1: The bath (copper-sulfuric acid electrolyte 22) composition and treatment conditions for forming the first roughening layers are the same as the Conditions 1 in the first embodiment shown in Table 1.
Conditions 2: The second smooth copper-plating layer forming treatment conditions (copper-sulfuric acid electrolyte 22) are the same as the Conditions 1 in the first embodiment shown in Table 2.

Conditions 3: The anti-rust layer forming conditions are the same as the conditions for forming the anti-rust layers in the first embodiment.

The measurement conditions, results, and evaluation method are same as the measurement conditions, results, and evaluation method explained as the first embodiment as well.

The remaining copper was evaluated in the same way as that in the first embodiment as well.

### Example 6

As the base material, surface-untreated electrolytic copper foil before perforation with a glossy surface side roughness of 2.5 µm in terms of the surface roughness Rz and with an ordinary temperature elongation rate of 5.2% (double-sided glossy electrolytic copper foil produced by Furukawa Electric Co., Ltd.) was used. Roughening and surface treatment similar to those in Example 5 were carried out so that the surface roughnesses of the two surfaces after the secondary roughening surface by step 2 became 3.0 µm in terms of Rz. Evaluation and measurement similar to those in Example 5 were carried out.
The results are shown in Table 6.

### Example 7

As the base material, instead of the surface-untreated electrolytic copper foil before perforation used in Example 5, rolled foil of oxygen-free copper with a thickness of 18 µm, the ordinary temperature elongation rate of 4.2%, and a surface roughness Rz of 0.8 µm on the two surfaces of the base material (produced by Furukawa Electric Co., Ltd.) was used. Other than this, the roughening and surface treatment were carried out after the perforation in the same way as in Example 5. Evaluation and measurement similar to those in Example 5 were carried out.
The results are shown in Table 6.

### Example 8

As the base material, copper-tin alloy foil with a thickness of 18 µm, the ordinary temperature elongation rate of 3.5%, and a tin content of 0.15% (produced by Furukawa Electric Co., Ltd.) was used. Roughening was applied to the two surfaces of the base material under the Conditions 1 and 2 shown in the following Tables 4 and 5.
The conditions are the same as the Conditions 1 and 2 shown in the above Tables 1 and 2 except the stannous sulfate described in the Conditions 1 in Table 3 and the Conditions 2 in Table 4.
Note that, other than the composition of the copper-sulfuric acid electrolyte 22 in the roughening process being different, in the same way as Example 5, roughening and surface treatment were carried out so that the roughness Rz of the obtained treated surfaces became 3.0 µm or less. Evaluation and measurement similar to those in Example 5 were carried out.
The results are shown in Table 6.

**Table 4**

| Conditions 1A, Composition of Bath Forming First Roughening Layer (Copper-Sulfuric Acid Electrolyte 22) and Treatment Conditions | |
|---|---|
| Copper sulfate | 23.5 g/liter as metallic copper |
| Sulfuric acid | 100 g/liter |
| Sodium molybdate | 0.25 g/liter as molybdenum |
| Hydrochloric acid | 0.002 g/liter as chlorine ions |
| Stannous sulfate | 2.35 g/liter as tin |
| Ferric sulfate | 0.20 g/liter as metallic iron |
| Chromium sulfate | 0.20 g/liter as trivalent chromium |
| Bath temperature: | 25.5°C |
| Pulse cathode electrolysis on-time | 10 ms |
| Pulse cathode electrolysis off-time | 60 ms |
| Pulse cathode electrolysis mean plating current density | 22.5 A/dm² |

**Table 5**

| Conditions 2A, Second Smooth Copper-Plating Layer Forming Treatment Conditions, Copper-Sulfuric Acid Electrolyte 22] | |
|---|---|
| Copper sulfate | 45 g/liter as metallic copper |
| Stannous sulfate | 4.5 g/liter as tin |
| Sulfuric acid | 110 g/liter |
| Bath temperature | 50.5°C |
| DC cathode electrolytic plating current density | 18.5 A/dm² |

### Comparative Example 5

As the base material, the perforated copper foil used in Example 5 was used. The two surfaces were treated with a similar bath composition as that for Example 5, but the DC cathode electrolytic plating is carried out instead of the pulse cathode electrolytic plating so as to obtain roughnesses Rz of both of the obtained roughened surfaces of 3.0 µm. Other than that, the same treatment as that in Example 5 was applied. Evaluation and measurement similar to those in Example 5 were carried out.
The results are shown in Table 6.

### Comparative Example 6

As the base material, the perforated copper foil used in Example 6 was used. The two surfaces were treated in the same way as Comparative Example 5. Other than this, evaluation and measurement similar to those in Example 5 were carried out.
The results are shown in Table 6.

### Comparative Example 7

As the base material, the perforated copper foil used in Example 7 was used. The two surfaces were treated in the same way as Comparative Example 5. Other than this, evaluation and measurement similar to those in Example 5 were carried out.
The results are shown in Table 6.

### Comparative Example 8

As the base material, the rolled copper foil used in Example 8 was used. The two surfaces were treated in the same way as Comparative Example 5. Other than this, evaluation and measurement similar to those in Example 5 were carried out.
The results are shown in Table 6.

### Comparative Example 9

As the base material, non-perforated copper foil of MP-18 µm of columnar crystals formed into a middle profile (MP) shape classified by the IPC standard, having a surface roughness Rz on the matte surface side of 3.8 µm, and having a surface roughness Rz on the glossy surface side of 1.8 µm was used. This was treated and by DC electrolytic plating in the same way as the treatment in step 2 and evaluated and measured in the same way as Example 5.
The results are shown in Table 6.

**Table 6**

| | | Roughness Rz before treatment [µm] | Roughness Rz after roughening [µm] | Peel strength (average) [kg/cm] | Adhesive strength, dispersion chart evaluation | Visual evaluation of extent of remaining copper |
|---|---|---|---|---|---|---|
| Example 5 Electrolytic foil | Glossy surface side | 1.2 | 2.85 | 0.81 | Very good | Good |
| | Matte surface side | 0.8 | 2.55 | 0.75 | Very good | Very good |
| Example 6 Electrolytic foil | Glossy surface side | 2.5 | 2.95 | 0.83 | Good | Good |
| | Matte surface side | 0.8 | 2.5 | 0.78 | Very good | Very good |
| Example 7 Rolled foil | Glossy surface side | 0.8 | 2.6 | 0.75 | Very good | Very good |
| | Matte surface side | 0.8 | 2.6 | 0.72 | Very good | Very good |
| Example 8 Rolled alloy foil | Glossy surface side | 0.8 | 2.65 | 0.81 | Very good | Very good |
| | Matte surface side | 0.8 | 2.7 | 0.8 | Very good | Very good |
| Comp. Ex. 5 Electrolytic foil | Glossy surface side | 1.2 | 2.9 | 0.91 | Fair to Good | Poor to Fair |
| | Matte surface side | 0.8 | 2.75 | 0.88 | Good | Fair |
| Comp. Ex. 6 Electrolytic foil | Glossy surface side | 2.5 | 3 | 1.15 | Fair | Poor to Fair |
| | Matte surface side | 0.8 | 2.7 | 0.79 | Fair to Good | Fair |
| Comp. Ex. 7 Rolled foil | Glossy surface side | 0.8 | 2.85 | 0.81 | Fair to Good | Fair |
| | Matte surface side | 0.8 | 2.8 | 0.78 | Fair to Good | Fair |
| Comp. Ex. 8 Rolled alloy foil | Glossy surface side | 0.8 | 2.9 | 0.88 | Fair | Fair |
| | Matte surface side | 0.8 | 2.95 | 1.01 | Fair | Fair |
| Comp. Ex. 9 Electrolytic foil | Glossy surface side | 1.8 | 2.95 | 0.95 | Fair | Poor to Fair |
| | Matte surface side | 3.8 | 5.25 | 1.48 | Poor to Fair | Poor |

As apparently from Table 6, the copper foils of Examples 5 to 8 had surface roughnesses of the same degree for both of the front and back. The roughened properties of the two surfaces were also no different.
Compared with Examples 5 to 8, the copper foils of Comparative Examples 5 to 8 were superior in adhesive strengths to Examples 5 to 8, but inferior in points of dispersion of adhesive strength and remaining copper to Examples 5 to 8. From the viewpoint of bonding of the active materials to be laminated on negative electrode collectors with a uniform thickness, when employed as the collectors for secondary batteries, the disadvantages arise in the charge and discharge characteristics.
In the electrolytic copper foil for general purpose use of Comparative Example 9, the surface roughness of the untreated copper foil greatly differed between the front and the back, therefore the roughened states of the two surfaces could not be made close in the roughening. For this reason, employing copper foil in which there is a considerable difference in the surface roughnesses between the front and the back of the untreated copper foil used as the base material makes obtaining uniform surface roughnesses of the two surfaces in the roughening difficult. Therefore, this is judged to be unpreferable.

As explained above, the copper foil obtained by surface treatment of perforated copper foil roughened by the pulse cathode electrolysis in the second embodiment of the present invention can be produced so that the two surfaces of the foil have substantially the same properties. Therefore, this is preferred as, for example, the copper foil for the collector for a lithium ion secondary battery.

### Third Embodiment

A third embodiment of the present invention relates to, for example, rolled copper foil and rolled copper alloy foil (surface-treated copper foil) suitable for a collector for a negative electrode of a lithium ion secondary battery and to a method of production (surface treatment method) for the same.
In the Present Description (specification), when it is not necessary to differentiate the rolled copper foil and the rolled copper alloy foil in expression, they will be sometimes expressed as "rolled foil" or "rolled copper (alloy) foil".

### Base Material

In surface-treated copper foil preferred for rolled copper foil (alloy foil) for a negative electrode collector of a lithium ion secondary battery in the third embodiment of the present invention, as the base material, surface-untreated rolled copper foil (alloy foil) is used. The surfaces are treated by roughening by pulse cathode electrolytic plating or by DC cathode electrolysis roughening to provide first roughening layers comprised of metallic copper or copper alloy.

As the untreated copper foil of the base material of the third embodiment of the present invention, rolled copper foil made of tough pitch copper (oxygen-containing copper) or oxygen-free copper or copper alloy foil cast and rolled from a suitable metal formulation is used. The base material is treated on its surface and, for example, processed to a collector of a secondary battery.
As the base material, rolled copper foil made of oxygen-free copper is preferred in the points of conductivity and elongation as explained for the base material of the first embodiment. This is because the ingot does not contain oxygen or metal oxides.

As the base material, rolled copper alloy foil is employed when adjustment of a property, for example, elongation rate or conductivity, which cannot be achieved with rolled copper foil made of oxygen-free copper is necessary due to the usage conditions of the copper foil.
As the copper alloy foil, copper alloys comprised of copper and various metals can be selected by considering properties such as hardness, elongation rate, heat resistance, and rust prevention property. The copper alloy foil employed can be selected according to the application from the group of systems which have the properties of workability (elongation) and conductivity close to electrolytic copper foil and have advantageous rolling conditions such as copper-tin, copper-chromium, copper-zinc, copper-iron, copper-nickel, copper-tin-chromium, copper-zinc-tin, copper-nickel-tin, and copper-nickel-silicon alloys.

As the untreated rolled copper foil (alloy foil) used as the base material, preferably a foil with roughnesses on the front and back of 0.8 to 2.5 µm in range in terms of the surface roughness Rz defined in JIS-B-0601 is employed. Further, rolled copper foil (alloy foil) which is excellent in electrical conductivity and has a value defined in IPC-TM-650 of 35 to 45 kN/cm² in range (in terms of Young's modulus, 50 to 65 MPa), is preferred.

Preferably, the rolled copper foil (alloy foil) having the elongation rate at the ordinary temperature of 3.5% or more as a mechanical characteristic is employed. The reason for that it is demanded to maintain adhesion despite expansion and contraction of the silicon-based active material during charging and discharge and follow the expansion and contraction.

### Roughening

In the third embodiment of the present invention, the untreated rolled copper foil (alloy foil) used as the base material is treated, as the first roughening, by roughening by the pulse cathode electrolytic plating or by roughening by the DC cathode electrolytic plating so as to thereby form copper (alloy) nodules on the surfaces of the untreated rolled copper (alloy) foil to give extremely low and uniform roughening.
Further, as the second roughening, the surfaces are roughened by smooth plating.
The front and back of the untreated rolled copper foil (alloy foil) used as the base material are roughened in the above way in order to improve the adhesion of the silicon-based active material with respect to the surfaces of the copper foil (collector) and uniformly coat a larger amount of active material without dropout.
The surfaces of the copper foil (collector) of the third embodiment of the present invention are roughened to improving adhesion with the silicon-based active material containing a binder and enable uniform coating of a larger amount of active material without dropout.

Knobby fine nodules deposited by the smooth plating in the first roughening maintain sound shapes and maintain uniformity of the nodules. The roughened surfaces of the second plating layer are controlled to a surface roughness Rz defined in JIS-B-0601 of 3.0 µm or less, preferably 2.5 to 3.0 µm in range.

### Formation of Anti-Rust Layers

Next, preferably, in the same way as explained in the first embodiment, the surfaces of the second plating layer are provided with anti-rust layers (third anti-rust layers).

### Formation of Protective Layers

The surfaces of the anti-rust layers, in the same way as explained in the first embodiment, are desirably provided with a protective layer (fourth protective layer) comprised of single molecule layers of a silane coupling agent.

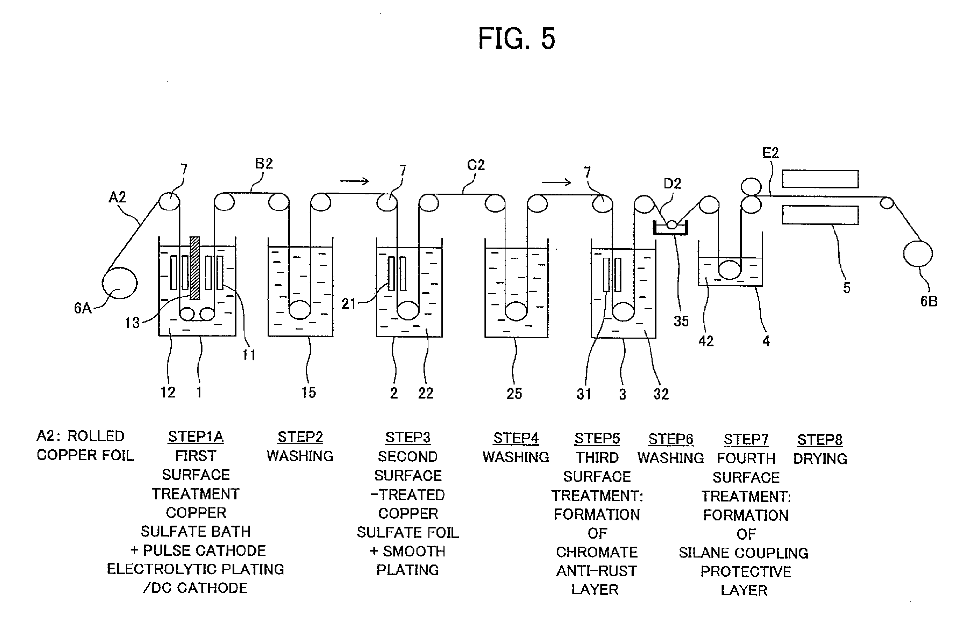

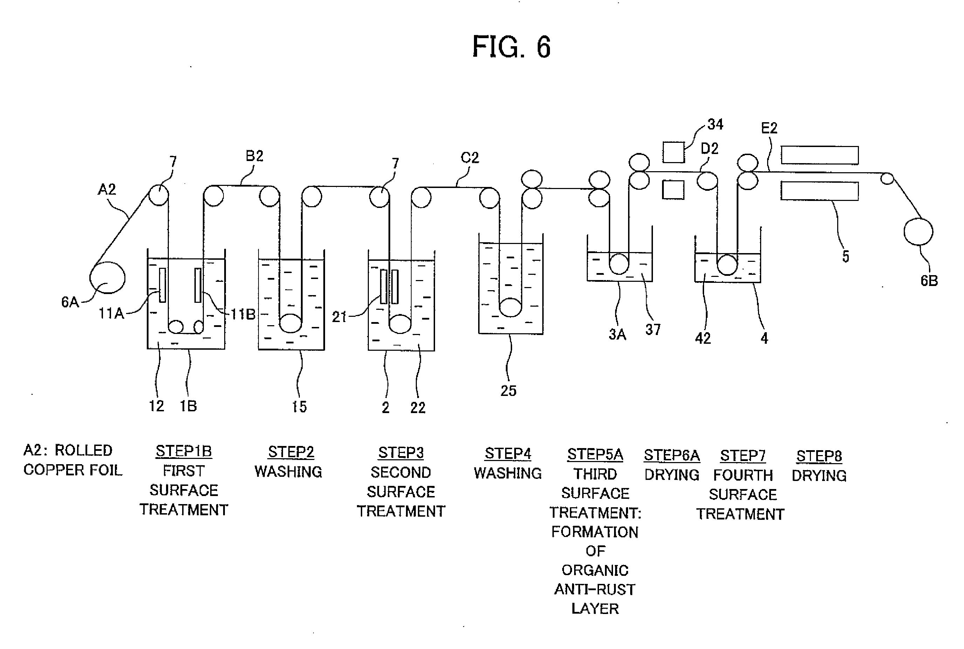

Referring to FIG. 5 and FIG. 6, a method of surface treatment of untreated rolled copper foil (alloy foil) preferred for the negative electrode collector will be explained as the third embodiment of the present invention.

### First Roughening (Step 1)

Untreated rolled copper foil (alloy foil) (rolled foil electrolytically degreased after rolling) A2 which was taken up around the reel 6A in FIG. 5 is guided to the first roughening tank 1A for pulse cathode electrolysis or DC cathode electrolysis roughening for deposition of roughening nodules.
In the first roughening tank 1A, the two surfaces of the rolled copper (alloy) foil A2 are treated at the same locations at the same time by the pulse cathode electrolysis or the DC cathode electrolysis roughening so as to form first roughening layer comprised of knobby fine roughening copper nodules made of fine roughening copper (alloy) nodules.

Note that, as shown in FIG. 6, one surface of the untreated copper (alloy) foil may be roughened by roughening from the inlet to the bottom side of the first roughening tank 1B, and the other surface may be roughened by roughening from the bottom side to the outlet side of the first roughening tank 1B.
That is, from the inlet to the bottom side of the first roughening tank 1A, a first electrode 11A for roughening one surface of the untreated copper (alloy) foil A2 is arranged to perform the pulse cathode electrolysis or the DC cathode electrolysis roughening for one surface of the copper foil A2. The other surface is roughened by a second electrode 11B.
The copper foil which has been roughened on one surface is sent from the bottom side to the outlet side of the first roughening tank 1A. An electrode 11B arranged in the middle is used to treat the other surface of the untreated copper (alloy) foil by the pulse cathode electrolysis or the DC cathode electrolysis roughening and thereby roughen the other surface of the copper foil A2.
The advantages of not roughening the two surfaces of the rolled foil A2 at one time, but separately roughening only surface at a time will be explained later.

A rolled copper (alloy) foil B2 which has been roughened on both surfaces is washed in the washing tank 15 (step 2), then guided to the second plating tank 2.

### Second Roughening (Step 3)

In the second plating tank 2, an iridium oxide anode electrode 21 is arranged and an electrolyte 22 having the same composition as that of the copper-sulfuric acid electrolyte 12 in the first roughening tanks 1A and 1B is filled whereby smooth plating (second plating layers) is applied.

A copper (alloy) foil C2 treated by the smooth plating is washed in the washing tank 25 (step 4), then guided to the third surface treatment tank 3.

### Formation of Anti-Rust Layer (Step 5)

In the third surface treatment tank 3 illustrated in FIG. 5, an SUS anode 31 is arranged and a chromate electrolyte 32 is filled whereby chromate anti-rust layers are provided.

A copper (alloy) foil D2 provided with chromate anti-rust layer (third anti-rust layer) in the third surface treatment tank 3 is washed in the washing tank 35 (step 6), then guided to the fourth surface treatment tank 4.

### Formation of Protective Layers (Step 7)

The fourth surface treatment tank 4 is filled with a silane coupling agent 42. The silane coupling agent is coated on the surfaces of the copper (alloy) foil D.

It is also possible to form the anti-rust layer by an organic corrosion inhibitor.
FIG. 5 shows the process of forming the anti-rust layer by an organic corrosion inhibitor. A BTA solution 37 is filled in a third surface treatment tank 3A. BTA films are coated on the surfaces of the copper foil C2, then are dried to thereby form anti-rust layers made of BTA.

A copper (alloy) foil E2 provided with the fourth protective layer passes through the dryer 5 and is taken up around the take-up roll 6.

As the method of roughening the surfaces of the untreated copper (alloy) foil A2 for use as the negative electrode collector of a lithium ion secondary battery, in order to raise the adhesion with a silicon-based active material and improve the bonding characteristic with a binder, it is important to make the roughness of the roughened surface low and excellent in uniformity and make the surface layers of the roughening copper nodules smooth.
For this reason, the rolled copper foil with shape roughness of the two surfaces of 0.8 to 2.5 µm in terms of the surface roughness Rz defined in JIS-B-0601 and with ordinary temperature elongations rate of 3.5% or more are preferably used.

In the surface-treated copper (alloy) foil of the third embodiment of the present invention, particularly the heat resistance and plastic followability at the time of the drying process in the coating and lamination of the active material and during charging and discharging after being assembled in the secondary battery are considered to be important, therefore for the mechanical characteristic, for example, a Vickers hardness Hv value of 80 to 180 in range is preferred, and the elongation rate of the copper (alloy) foil (elongation property at ordinary temperature, same below) of 3.5% or more is sufficient. In such copper (alloy) foil, peeling-off of the active material and breakage of the collector caused by remarkable plastic deformation due to the heat history will not occur.

### Pulse Cathode Electrolysis

The first roughening layers provided at the untreated rolled copper (alloy) foil A2 are applied by the pulse cathode electrolytic plating method in the first roughening tank 1A. That is, the first roughening forms knobby roughening nodules of copper or copper alloy on the surfaces of the untreated copper (alloy) foil.
As a concrete example of forming the copper roughening nodule layer, the composition of the copper-sulfuric acid electrolyte 12 and the conditions for application of current for the pulse cathode electrolysis which were explained in the first embodiment are applied. A sound layer of copper knobby roughening nodules is formed on the surfaces of the copper foil with a suitable flowing speed and distance between electrodes.
Next, the first roughened copper foil B is moved to the second copper-plating tank 2.

As shown in FIG. 6, in order to separately apply the pulse cathode electrolytic plating to the front and the back of the rolled copper (alloy) foil A2, the method of roughening the surface of one side under the treatment conditions described before between the inlet and the bottom side of the first roughening tank 1A, then roughening the other surface from the bottom side to the outlet of the first roughening tank 1A is preferred from the viewpoint of uniformity and stability of the roughening shapes as well and is a preferred technique as the pulse cathode electrolytic plating method.
Compared with the method of simultaneously roughening the two surfaces of the rolled copper (alloy) foil A2, there are the effects of suppressing trouble such as sagging and stretching or burn abnormalities which derive from heat generation of the foil resulting from the total instantaneous peak current density. Further, when the pulse cathode electrolytic plating method is used, it is necessary to select a flowing speed suited to the peak current density.

### DC Cathode Electrolysis Roughening

The first roughening layers provided at the untreated rolled copper (alloy) foil A may effectively be applied by the DC cathode electrolysis roughening in the first roughening tank 1A as well.
As a concrete example of forming the copper roughening nodule layer, basically the plating bath composition and bath temperature conditions which were used in the pulse cathode electrolytic plating method can be used. However, the cathode electrolytic plating current density is set to 28 to 38.5 A/dm², the current is continuously applied, and sound layers of copper knobby roughening nodules are formed on the copper foil surfaces in the first roughening tank 1A with a suitable flowing speed and distance between electrodes.
In this case, when a low flowing speed is selected, preferably the treatment is carried out under a low current density condition for the current to be applied to the power supply contact roll 7 and the iridium oxide anode 11, while in the case of high flowing speed, a high current density is set and selected.

In the second copper-plating tank 2, the smooth plating is applied for the purpose of preventing the fine roughening nodules which were deposited in the first roughening from dropping out from the surfaces of the copper (alloy) foil and of making the surface shapes of the individual fine roughening nodules uniform and making the surface areas small and uniform. By this second roughening, the trouble in charging and discharging due to separation of copper (alloy) nodules and unintentional deposition to the separator and abnormal electrodeposition together with the lithium compound used for the positive electrode, can be avoided.

### Copper-Sulfuric Acid Electrolyte 22

The copper-sulfuric acid electrolyte 22 in the second copper-plating tank 2 specifically contains copper sulfate in 35 to 55 g/liter as copper and has a concentration of sulfuric acid (H₂SO₄) of 90 to 110 g/liter. The bath temperature is set to 35 to 55°C.

### Plating Conditions

The cathode electrolytic plating current density is set to 15 to 20 A/dm². A smooth copper plating layer is formed on the surfaces of the first roughening layer (fine copper roughening nodules) by a suitable flowing speed and distance between electrodes.

The roughness Rz of the final roughening shape after forming the smooth plating layer in this case is preferably made 3.0 µm or less in terms of the surface roughness Rz defined in JIS-B-0601 for the two surfaces.

### Rust-Proofing

Next, preferably the foil is dipped in a chromate corrosion inhibitor or treated by cathode electrolysis (third surface treatment tank 3 in FIG. 1) according to need to provide a third anti-rust layer and thereby raise the rust prevention power (performance).

### Formation of Protective Layers

Further, preferably, a silane coupling agent is suitably coated (fourth protective layer).

### Examples and Comparative Examples

Examples of the third embodiment of the present invention will be explained.

### Example 9

As the base material, the untreated rolled copper foil made of oxygen-free copper and having a thickness of 0.018 mm which had the surface roughness of both of the front and back surfaces of the base material of 0.8 µm in terms of the surface roughness Rz defined in JIS-B-0601 and the ordinary temperature elongation rate of 6.2% was used. The two surfaces of this foil were roughened under the following conditions.
In this roughening, according to the process shown in FIG. 5, the roughening was divided to the front surface from the inlet to the bottom side of the first roughening tank and to the back surface from the bottom to the outlet side of the tank. The on-time was set to 10 ms and the off-time to 60 ms for the pulse cathode electrolysis roughening to thereby provide the first roughening layers on the two surfaces.

The reason for dividing the pulse treatment into two operations is to ensure more reliable effects of setting the on-time and off-time. And the reason of the treatment of the two surfaces at the flowing speed in the tank in the limited first roughening tank 1A is to avoid the disadvantage insufficient supply of copper ions at both surfaces when reaching the peak current and the resultant problems of uneven roughening.

Next, the first roughening layer surfaces were smoothly plated by the DC electrolysis capsule plating simultaneously at both of the front and back surfaces from the inlet to the bottom side of the second copper-plating tank 2 to thereby provide second plating layers.

Conditions 1: The bath (copper-sulfuric acid electrolyte 22) composition and treatment conditions for forming the first roughening layers are the same as the Conditions 1 in the first embodiment.

Conditions 2: The second smooth copper-plating layer forming treatment conditions and copper-sulfuric acid electrolyte 22 are the same as the Conditions 2 in the first embodiment.

Conditions 3: The anti-rust layer forming conditions are the same as the Conditions 3 in the first embodiment.
Conditions 4: The protective layer forming conditions are the same as the Conditions 3 in the first embodiment.

The surface roughness of the obtained double-sided roughened copper foil was measured by the surface roughness Rz defined in JIS-B-0601.
The results are shown in Table 8.

The measurement conditions and results and evaluation method are the same as those in the method explained in the first embodiment as well.

### Example 10

As the base material, untreated rolled copper foil made of rolled foil of tough pitch copper (produced by Furukawa Electric Co., Ltd.) and having a thickness of 0.018 mm which had the surface roughness of the two surfaces of 2.5 µm in terms of the surface roughness Rz defined in JIS-B-0601 and the ordinary temperature elongation rate of 6.2% was used. Other than that, the roughening was applied under similar conditions as those applied in Example 9. The roughening and surface treatment were carried out so that the surface roughness Rz of the second plating layers became 3.0 µm or less. Evaluation and measurement similar to those in Example 9 were carried out.
The results are shown in Table 8.

### Example 11

Instead of the untreated rolled copper foil used in Example 8, as the base material, EFTEC-tricopper-tin alloy rolled foil (produced by Furukawa Electric Co., Ltd.) having a thickness of 0.018 mm, the ordinary temperature elongation rate of 3.6%, and surface roughness Rz of 1.1 µm was used. Other than that, the roughening and surface treatment similar to those in Example 8 were carried out. Evaluation and measurement similar to those in Example 8 were carried out.
The results are shown in Table 8.

### Example 12

As the base material, the untreated rolled copper foil used in Example 8 was used. The off-time at the time of the pulse cathode electrolysis of the first roughening treatment conditions was set to 40 ms. Other than that, the roughening and surface treatment similar to those in Example 8 were carried out. Roughening and surface treatment similar to Example 8 were carried out so that the surface roughness Rz on the surface treatment side obtained became 3.0 µm or less. Evaluation and measurement similar to those in Example 8 were carried out.
The results are shown in Table 8.

### Example 13

As the base material, the untreated rolled copper foil made of oxygen-free copper used in Example 8 was used. This was treated by the DC cathode electrolytic plating (current density value of 28.5 A/dm²) under the following conditions shown in Table 7 so that the surface roughness Rz became 3.0 µm or less for the front and back roughened surfaces obtained.
In Table 7, the condition of ferric sulfate is added to Table 1.
In the second plating layer forming process and on, the same treatment as that in Example 8 was applied. Evaluation and measurement similar to those in Example 8 were carried out.
The results are shown in Table 8.

**Table 7**

| Conditions 3A, Composition of Bath Forming First Roughening Layer and Treatment Conditions | |
|---|---|
| Copper sulfate | 23.5 g/liter as metallic copper |
| Sulfuric acid | 100 g/liter |
| Sodium molybdate | 0.25 g/liter as molybdenum |
| Hydrochloric acid | 0.002 g/liter as chlorine ions |
| Ferric sulfate | 0.20 g/liter as metallic iron |
| Chromium sulfate | 0.20 g/liter as trivalent chromium |
| Bath temperature: | 25.5°C |
| DC cathode electrolytic plating current density | 28.5 A/dm² |

### Comparative Example 10

As the base material, the untreated copper foil of MP-18 µm of columnar crystals formed into a middle profile (MP) shape classified by the IPC standard according to the electrolytic foil forming conditions (Rz on electrodeposition solution side of 3.8 µm and Rz on drum surface side of 2.2 µm) was used. Treatment and evaluation and measurement similar to those of Example 8 were carried out.
The results are shown in Table 8.

### Comparative Example 11

As the base material, the same copper foil as that in Comparative Example 10 was used. Treatment and evaluation and measurement similar to those in Example 11 were carried out. The results are shown in Table 8.

### Comparative Example 12

As the base material, the same copper foil as that in Comparative Example 10 was used. Treatment and evaluation and measurement similar to those in Example 12 were carried out. The results are shown in Table 8.

**Table 8**

| | | Roughness of surface of untreated coil, Rz [µm] | Roughness of surface after roughening, Rz [µm] | Peel strength (average) [kg/cm] | Adhesive uniformity , dispersion chart evaluation | Visual evaluation of extent of remaining copper |
|---|---|---|---|---|---|---|
| Example 9 Rolled OFC | Outside of winding | 0.8 | 2.65 | 0.61 | Very good | Very good |
| | Inside of winding | 0.8 | 2.6 | 0.58 | Very good | Very good |
| Example 10 Rolled TPC | Outside of winding | 2.5 | 2.95 | 0.73 | Very good | Good |
| | Inside of winding | 2.5 | 2.95 | 0.7 | Very good | Very good |
| Example 11 Rolled alloy foil | Outside of winding | 1.1 | 2.85 | 0.68 | Very good | Very good |
| | Inside of winding | 1.1 | 2.9 | 0.72 | Good | Good |
| Example 12 | Outside of winding | 0.8 | 2.95 | 0.75 | Good | Fair to Good |
| | Inside of winding | 0.8 | 2.85 | 0.72 | Good | Good |
| Example 13 Rolled OFC | Outside of winding | 0.8 | 2.9 | 0.78 | Fair to Good | Fair to Good |
| | Inside of winding | 0.8 | 2.75 | 0.74 | Good | Good |
| Comp. Ex. 10 | Glossy surface side | 2.2 | 2.95 | 1.05 | Fair to Good | Fair to Good |
| | Matte surface side | 3.8 | 5.25 | 0.85 | Fair | Fair |
| Comp. Ex. 11 | Glossy surface side | 2.2 | 2.95 | 1.11 | Fair to Good | Fair |
| | Matte surface side | 3.8 | 5.25 | 0.94 | Poor to Fair | Poor to Fair |
| Comp. Ex. 12 | Glossy surface side | 2.2 | 2.95 | 1.16 | Fair | Poor to Fair |
| | Matte surface side | 3.8 | 5.25 | 1.48 | Poor to Fair | Poor |

As clear from Table 8, the surface-treated copper foils of Examples 8 to 12 had no variation in roughened shape and had roughening properties of the two surfaces no different from each other.
When using such copper (alloy) foil as the collector, the surface was coated, pressed, and dried with a silicon-based active material to form a negative electrode. At this time, the silicon-based active material could be laminated to a uniform thickness. A lithium ion secondary battery having the negative electrode was excellent in the charge and discharge properties and had a long service life. In particular, Examples 8 and 9 showed better results of evaluation than Example 11 and the on/off-time of the pulse electrolysis of the first roughening is preferably set to 10 ms/60 ms.

Compared with Examples 5 to 12, the electrolytic copper foils of Comparative Examples 10 to 12 had roughnesses on the glossy surface side of the same degree and had adhesive strengths higher than those in the examples. However, the roughnesses of the front and back were greatly different, therefore the roughened states of the two surfaces could not be made the same, and the adhesive strength became greatly different between the front and the back. Further, particularly, the result was not satisfactory in the point of the remaining copper on the electrodeposition solution surface side. This copper foil was used as the collector and was coated, pressed, and dried with a silicon-based active material on its surface. However, the result was not satisfactory from the viewpoint of the thickness uniformity of the negative electrode collector. For this reason, a lithium ion secondary battery using the laminate as the negative electrode had a difference in the potential between the front and back surfaces of the negative electrode. When there was a difference in the potential in this way, if assembling a plurality of electrodes in series or parallel to form a circuit, a problem arose in the charge and discharge efficiency, therefore the properties as the collector could not be satisfied.

As explained above, the rolled copper (alloy) foils roughened by the pulse cathode electrolysis roughening or the DC cathode electrolysis roughening in the third embodiment of the present invention can be produced so that the two surfaces have substantially the same properties. Therefore, for example, they are preferred as the collectors for lithium ion secondary batteries. A negative electrode using this rolled copper (alloy) foil has the excellent effects that problems in the potential of the lithium ion secondary battery are avoided and longer charge and discharge cycles are enabled.

The first to third embodiments of the present invention were explained, but the application of the surface-treated copper foil of the present invention is not limited to copper foils for the negative electrode collectors of the lithium ion secondary batteries illustrated as the first to third embodiments. They can also be applied to other applications having demands the same as those for the copper foil for the negative electrode collector of a lithium ion secondary battery.

### Reference Signs List

1... first roughening tank, 2 ... second copper-plating tank, 3... third surface treatment tank, 4... fourth surface treatment tank, 7... power supply contact roll, 11... iridium oxide anode, 12... copper-sulfuric acid electrolyte, 22... copper-sulfuric acid electrolyte, and 100... punching machine.

## Claims

1. Surface-treated copper foil, wherein,
a surface-untreated copper foil as a base material, is provided with a first roughening layer made of copper metal by pulse cathode electrolytic plating in order to improve adhesion with an active material, and
a second copper-plating layer is provided on the surface of the first roughening layer by smooth copper plating in order to hold the adhered copper nodules.

2. Surface-treated copper foil as set forth in claim 1, wherein
the active material comprises a silicon-based active material, and
the surface-treated copper foil is used as a copper foil for a negative electrode collector of a lithium ion secondary battery.

3. Surface-treated copper foil as set forth in claim 2, wherein the surface roughness of the secondary copper-plating layer is 3.0 µm or less in terms of the surface roughness Rz defined in JIS-B-0601.

4. A surface-treated copper foil as set forth in claim 2, wherein
an elongation rate in an ordinary temperature state of the untreated rolled copper foil used as the base material is 3.5% or more, and
the Vickers hardness of the untreated rolled copper foil used as the base material is 80 to 110 in range.

5. A surface-treated copper foil as set forth in claim 2, wherein a surface roughness of the surface to be roughened, in the untreated rolled copper foil used as the base material has a surface roughness Rz defined in JIS-B-0601 of 0.8 to 2.5 µm in range.

6. A surface-treated copper foil as set forth in claim 2, wherein the thickness of the base material is 0.0018 mm.

7. A surface-treated copper foil as set forth in any one of claims 1 to 6, wherein the surface-untreated copper foil used as the base material is a rolled copper foil or rolled copper alloy foil made of oxygen-free copper.

8. A surface-treated copper foil as set forth in any one of claims 1 to 6, wherein the surface-untreated copper foil used as the base material is a rolled copper foil or rolled copper alloy foil.

9. A surface-treated copper foil as set forth in any one of claims 1 to 6, wherein the surface-untreated copper foil used as the base material is a rolled copper foil or rolled copper alloy foil in which a plurality of through-holes fine enough to pass ions are formed.

10. A surface-treated copper foil as set forth in claim 9, wherein the area of an opening portion of one hole of the through holes is 0.01 mm² or less.

11. A surface-treated copper foil as set forth in claim 10 or 11, wherein a total area of opening portions of the through holes is 55% or less of the area of the untreated foil before formation of the through holes.

12. A surface-treated copper foil as set forth in any one of claims 9 to 11, wherein:
the thickness of the untreated rolled copper foil or the untreated rolled copper alloy foil, formed with the through holes, is 8 to 35 µm, and
the conductivity is 85% IACS or more.

13. A surface-treated copper foil as set forth in claim 9, wherein the rolled copper alloy foil used as the base material is comprised a foil made of an alloy of copper and tin.

14. A surface-treated copper foil as set forth in any one of claims 1 to 13, wherein:
the second copper-plate layer is provided with a third anti-rust layer made of a corrosion inhibitor, and
the third anti-rust layer is provided with a fourth protective layer made of a coupling agent.

15. A surface-treated copper foil as set forth in claim 14, wherein:
the third anti-rust layer is formed by chromium layers, the amount of chromium deposition of the chromium layers being 0.005 to 0.025 mg/dm² as metallic chromium, and
the fourth protective layer is formed by a silane coupling agent, the deposition amount of the silane coupling agent being 0.001 to 0.015 mg/dm² as silicon.

16. A method of surface treatment of copper foil comprising:
a step of forming, on a base material made of a surface-untreated copper foil, a first roughening layer which enables adhesion with an active material made of metallic copper by pulse cathode electrolytic plating; and
a step of forming, on the surface of the first roughening layer, a second copper-plating layer by smooth copper plating.

17. A method of surface treatment of copper foil as set forth in claim 16, wherein the pulse cathode electrolytic plating treatment is carried out the following operations,
in a state where the copper-sulfuric acid electrolyte is made to flow in the first roughening tank by a predetermined flowing speed, and
repeats processing of applying current with a predetermined current density between a first electrode arranged in the first roughening tank and a second electrode with which the base material contacts at the outside of the first roughening tank in the predetermined on-time and stopping the application of the current in a predetermined off-time.

18. A surface treatment method as set forth in claim 16, wherein:
the pulse cathode electrolytic plating treatment is carried out the following operations,
in a state where the copper-sulfuric acid electrolyte is made to flow inside the first roughening tank by a predetermined flowing speed,
performing roughening at one surface of the surface-untreated rolled copper foil from the inlet to the bottom side of the first roughening tank and at the other surface from the bottom to the outlet side of the first roughening tank; and
separately forming the first roughening layers on the front and back of the base material.

19. A surface treatment method as set forth in claim 17 or 18, wherein
the copper-sulfuric acid electrolyte filled in the first roughening tank is an electrolytic solution obtained by mixing 20 to 30 g/liter of copper sulfate as copper, sulfuric acid having concentration of 90 to 110 g/liter as H₂SO₄, 0.15 to 0.35 g/liter of Sodium molybdate as Mo, and 0.005 to 0.010 g/liter of chlorine in chlorine ion conversion, a bath temperature is set to 18.5 to 28.5°C, and
the peak current density is 157.5 A/dm² or less, the on-time is 10 ms, the off-time is 60 ms, and the pulse cathode electrolytic plating treatment is carried out by repeating the on-time and the off-time.

20. A surface treatment method as set forth in claim 16, wherein:
the smooth copper plating is carried out the following operations,
in a state where the copper-sulfuric acid electrolyte is made to flow in the second copper-plating tank by a predetermined flowing speed; and
continuously applying current by a predetermined current density between the first electrode arranged in the second copper-plating tank and the second electrode which the base material contacts at the outside of the second copper-plating tank.

21. A surface treatment method as set forth in claim 20, wherein:
the copper-sulfuric acid electrolyte filled in the second copper-plating tank is set so that the content of the copper sulfate is 35 to 55 g/liter as copper, the concentration of the sulfuric acid is 90 to 110 g/liter as H₂SO₄, and the bath temperature is 35 to 55°C.

22. A surface treatment method as set forth in any one of claims 16 to 21, further comprising:
a step of forming a third anti-rust layer made of a corrosion inhibitor on the second copper-plate layers; and
a step of forming a fourth protective layer made of a coupling agent on the third anti-rust layer.

23. Copper foil for a negative electrode collector of a lithium ion secondary battery, wherein
a base material made of a surface-untreated copper foil on which a first roughening layer made of copper metal is provided by pulse cathode electrolytic plating in order to improve adhesion with a silicon-based active material,
a second copper-plating layer is provided on the surface of the first roughening layer by smooth copper plating in order to hold the adhered copper nodules,
a third anti-rust layer made of a corrosion inhibitor is provided on the surfaces of the second copper-plate layer, and
a fourth protective layer made of a coupling agent is provided on the surfaces of the third anti-rust layers.
